(19) **Europäisches Patentamt**

**European Patent Office**

**Office européen des brevets**

(11) **EP 1 586 999 A1**

(12) **EUROPEAN PATENT APPLICATION**
published in accordance with Art. 158(3) EPC

(43) Date of publication:
**19.10.2005 Bulletin 2005/42**

(51) Int Cl.⁷: **G06F 12/14**, G06F 15/00, G06F 17/60

(21) Application number: **03786281.0**

(22) Date of filing: **24.12.2003**

(86) International application number:
**PCT/JP2003/016623**

(87) International publication number:
**WO 2004/066154 (05.08.2004 Gazette 2004/32)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **23.01.2003 JP 2003014245**

(71) Applicant: **SONY CORPORATION Tokyo 141-0001 (JP)**

(72) Inventors:
• **MURAKAMI, Miki, c/o SONY CORPORATION Tokyo 141-0001 (JP)**
• **HISAMATSU, Fumiaki, c/o SONY CORPORATION Tokyo 141-0001 (JP)**

(74) Representative: **Körber, Martin Hans Mitscherlich & Partner Patentanwälte Sonnenstrasse 33 80331 München (DE)**

(54) **CONTENT DELIVERY SYSTEM, INFORMATION PROCESSING APPARATUS OR INFORMATION PROCESSING METHOD, AND COMPUTER PROGRAM**

(57) An environment in which copyright management is exercised is supplied so that encrypted contents and the license for decrypting the encrypted contents can be handled independently. Further, each client legally uses the contents. When contents acquired by client A are to be moved to client B, the information about client B is attached to the contents so that client B can be identified. In this manner, the contents can be shared between clients A and B, while the contents are protected. A licensed user can use contents from a plurality of devices, while preventing an illegal use of the contents.

FIG. 17

## Description

Technical Field

The present invention relates to a contents distribution system, an information processing apparatus or method for using contents, and a computer program for managing the use of music data, image data, digital data such as electronic publications, motion pictures, and other contents distributed via a network or the like. Particularly, the present invention relates to a contents distribution system, an information processing apparatus or method for using contents, and a computer program for managing the use of contents in compliance with use conditions or a contract such as a license agreement.

More specifically, the present invention relates to a contents distribution system, an information processing apparatus or method for using contents, and a computer program that grant a license to the contents user to control the use of contents and provide contents protection. Particularly, the present invention relates to a contents distribution system, an information processing apparatus or method for using contents, and a computer program that permit a licensed user to use contents from a plurality of devices, while preventing an illegal use of contents.

Background Art

With the widespread use of the Internet in recent years, computer files and various digital contents are vigorously distributed over a network. Thanks to the widespread use of a broadband communications network (xDSL [x Digital Subscriber Line], CATV [Cable TV], wireless network, etc.), the mechanism for distributing music data, image data, digital data such as electronic publications, motion pictures, and other rich contents to the user without causing stress is about to be established.

The contents to be distributed are digital data, which can readily be copied, falsified, or otherwise manipulated. At present, these contents are frequently copied, falsified, or otherwise illegally manipulated. Such an illegal manipulation has been a major cause for diminishing the profits to a digital contents vendor. The prices of contents are then forced to rise. This incurs a vicious circle, because the raised prices hamper the spread of the contents.

With the use of a cryptographic technology, it is now possible to protect the contents in a communication path against a malicious third party. However, the problem is not limited to the process of contents distribution. The problem is rendered significant by illegal copying of contents and illegal use of contents after the contents are supplied to an authorized user.

A technology called "Digital Rights Management" (DRM) has been recently adopted to solve the above digital contents problem. The DRM technology will now be outlined with reference to its controversial points.

The DRM technology establishes such a scheme that the user cannot use contents until the user is licensed to use the contents. This scheme is provided, for instance, by Microsoft's system called "Windows Media Rights Manager" or IBM's system called "Electronic Media Management System" (EMMS).

Typically, the participants in a DRM system are a contents supplier, a license manager, and a user. The user owns a contents reproducing apparatus and uses the apparatus to enjoy contents. The license manager issues a license to the user. The contents supplier supplies contents to the user.

The contents (Cont) are distributed by the contents supplier. The contents are encrypted with a key (contents key $K_c$), which varies with the contents, and distributed in format E ($K_c$, Cont). Within this specification, the contents of the format are referred to as "encrypted contents".

When the user wishes to use a certain content Cont, the user requests the license manager to issue a license. In response to such a request, the license manager performs a billing process and other processes and then issues a license to the user.

More specifically, a contents key $K_c$ is given to the user's reproducing apparatus. To achieve such a purpose, the license manager shares a cryptographic key $K_u$ with each reproducing apparatus. The cryptographic key $K_u$ varies from one reproducing apparatus to another. (The cryptographic key $K_u$ is shared at the time of license issuance, or a shared cryptographic key is incorporated in the reproducing apparatus.) The contents key $K_c$ is encrypted with the cryptographic key $K_u$, and the resulting encrypted data E ($K_u$, $K_c$) is transmitted to the reproducing apparatus. This data is referred to as a "license token".

The reproducing apparatus for a licensed user can play contents by using the cryptographic key $K_u$, received license token E ($K_u$, $K_c$), and encrypted content E ($K_c$, Cont). First, the contents key $K_c$ is decrypted from the license token E ($K_u$, $K_c$) with the cryptographic key $K_u$. Then, the content Cont is decrypted from the encrypted content E ($K_c$, Cont) with the contents key $K_c$ and reproduced. Therefore, the content can be used only when the reproducing apparatus/license token/encrypted content combination is correct. It means that contents can be used by a licensed user only.

For protection of content-use rights, the reproducing apparatus must prevent decrypted contents from leaking outside. To achieve this purpose, the reproducing apparatus must perform such a process that the cryptographic key $K_u$, contents key $K_c$, and decrypted content Cont do not leak outside. The reason is that once decrypted contents leak outside, the leaked contents can be duplicated for unlimited use. In other words, it is required that the reproducing apparatus be capable of performing a process without leaking the cryptographic key $K_u$, contents key $K_c$, and decrypted content Cont to the outside. Within this specification, the reproducing apparatus conforming to such requirements is referred to as a "legal" reproducing apparatus.

In the DRM system, a contents license (permission for use) can be granted to the user by giving the contents key $K_c$ to the user's specific reproducing apparatus. When a license is to be granted in such a manner, it is essential that the reproducing apparatus receiving the contents key $K_c$ be legal. Therefore, the license manager who issues a license must designate a specific reproducing apparatus of the licensee and give the contents key to a legal reproducing apparatus only. To do this, the license manager needs to have a database concerning legal reproducing apparatus and issue licenses in accordance with the database.

However, in a situation where many reproducing apparatus exist, conducting a database search is a process that entails a considerable amount of time and cost. Particularly, if a license issuance process is frequently performed, for instance, due to the scheme for a repetitive contents download, an excessive load may be imposed on the server containing a database. In other words, the license issuance process in the DRM system is not scalable for an increase in the number of reproducing apparatus.

When, for instance, contents are to be supplied to a specific user, a user authentication process is performed prior to contents supply. If the DRM method is used in this instance, an additional process needs to be performed in addition to user authentication to specify the user's contents reproducing apparatus and generate a license specific to that reproducing apparatus. This decreases the contents supply processing speed.

Although the user generally owns and uses a plurality of contents reproducing apparatus, the contents license is granted to a specific reproducing apparatus. Therefore, even when all the reproducing apparatus owned by the user conform to the "legal" reproducing apparatus requirements, the user must repeatedly go through with a procedure for acquiring a license for each reproducing apparatus if the user wishes to use the same contents with a plurality of reproducing apparatus. Performing such a procedure takes a considerable amount of time. Further, the user is billed for ease use of the same contents so that the user has to pay an excessive fee.

Since the distribution industry has grown now, a plurality of contents distributors supply a wide variety of contents. However, if all the reproducing apparatus owned by the user are "legal" but registered with different contents distributors for licensing, the contents cannot be used with different reproducing apparatus even through the reproducing apparatus belong to the same user (the contents cannot be shared). Therefore, the merits of registering (or acquiring accounts) with a plurality of contents distributors cannot be obtained. From the viewpoint of the contents distributors, the degree of business cooperation and the level of convenience for customers are both low.

Disclosure of Invention

An object of the present invention is to provide an excellent contents distribution system, an information processing apparatus or method for using contents, and a computer program capable of optimally managing the use of contents in compliance with use conditions or a contract such as a license agreement.

Another object of the present invention is to provide an excellent contents distribution system, an information processing apparatus or method for using contents, and a computer program capable of granting a license to the contents user to control the use of contents and provide contents protection.

Still another object of the present invention is to provide an excellent contents distribution system, an information processing apparatus or method for using contents, and a computer program that permit a licensed user to use contents from a plurality of devices, while preventing an illegal use of contents.

The present invention has been made to achieve the above objects. In a first aspect of the present invention, a contents distribution system distributes contents to the user's clients. The user can own two or more clients, and each client legally uses the contents in compliance with an acquired license. The contents distribution system includes registration means for registering each client of the user and acquiring customer-related information; customer-related information management means for managing the customer-related information; contents supply means for supplying contents to a client in compliance with a request from the client; license supply means for supplying a license for acquired contents to the client, who issued the request, in compliance with a request from the client who has acquired contents from said content supply means; and contents copy certificate supply means for supplying a contents copy certificate, which indicates the contents move from one client of the user to an other is legal, to the move source client.

The above-mentioned "system" is a logical aggregate of a plurality of devices (functional modules for exercising specific functions). The devices and functional modules need not always be positioned within a single housing.

In the contents distribution system according to the first aspect of the present invention, when contents downloaded onto one client are to be moved to an other client, the contents copy certificate is attached to the contents to indicate that the contents move destination is legal, even if the user owns a plurality of clients and the clients are registered with different license servers. The move destination client can obtain the received contents in accordance with the contents copy certificate and verify that the right of reproduction is legal.

In other words, the contents distribution system according to the first aspect of the present invention permits a licensed user to use the contents from a plurality of devices while preventing the illegal use of the contents, even if the plurality of clients owned by the user are registered with different license servers. Further, the use of a contents distribution service is promoted, because a reduced workload is imposed on the user when the user uses the contents from a plurality of clients.

Contents sharing by a plurality of clients, which is described above, is accomplished when contents distributors cooperate with each other. The client at the contents move source and the client at the contents move destination may be registered with different contents distributors. In such a situation, the contents distributors can reference customer-related information each other by customer-related information supply means. The contents distributors, who registers the contents move source clients, simply has to perform a process for confirming that the contents move destination clients are legal devices owned by the same user.

The above-mentioned contents copy certificate supply means may generate a contents copy certificate that contains a license for a move destination client. In this instance, the move destination client can obtain the license from the contents copy certificate to use contents. Therefore, the move destination client does not have to register with a contents distributor and directly acquire a license. In this manner, contents sharing can be smoothly accomplished.

The contents move source client and contents move destination client may alternatively be registered with different license supply means so that each license supply means supplies its own public key to a registered client. In this instance, the contents copy certificate supply means can electronically sign the contents copy certificate to prevent the contents copy certificate from being falsified and assure a safe contents move by using a public key for license supply means with which the contents move destination client is registered. Further, the move destination client can achieve decryption with the public key and acquire a contents license.

The contents copy certificate supply means can acquire the license ID of the contents to be moved from the move source client and the client ID of the move destination client, send an inquiry to the customer-related information supply means to verify that the move source client is legal, and that the license for the contents to be moved is acquired by the move source client, and further that the user owning the move source client actually owns the move destination client, and supply the content copy certificate with a view toward optimally preventing the contents copy certificate from being forged or abused.

The above-mentioned customer-related information supply means simply has to manage a table defining the associations between leaf IDs and client IDs, a table defining the associations between client IDs and client public key certificates, a table defining the associations between client IDs and user IDs, a table defining the associations between contents IDs and license IDs, a table defining the associations between user IDs and contents IDs of downloaded contents, a table defining the associations between user IDs and license IDs of downloaded licenses, and a history of contents copy certificate issues.

Further, the customer-related information supply means has to update the customer-related information each time the contents supply means supplies contents to a client and/or each time the license supply means supplies a license to a client.

The contents distribution system according to the first aspect of the present invention may further include billing process means for performing a billing process on a client in accordance with a license supply to the client.

The amount billed by the billing process means for a license supply may be different from that for a contents copy certificate supply. For example, the charge for a contents copy certificate, which is equivalent to the charge for a second license supply, may be rendered lower than that for an initial license acquisition concerning the same contents or may be reduced to zero (free of charge). This reduces the cost load on the user who uses contents from a plurality of clients, thereby promoting the use of a contents distribution service.

In a second aspect of the present invention, a computer program is written in a computer-readable form so that the program runs on a computer system to perform a process for supplying a license for contents use. The user can own two or more clients and each client legally uses the contents in compliance with an acquired license. The computer program includes the steps of acquiring the license ID concerning the contents to be moved from a contents move source client and the client ID of a contents move destination client; verifying that the contents move source client is legal, and that the license for the contents to be moved is acquired by the move source client, and further that the user owning the move source client actually owns the move destination client; creating a contents copy certificate; and supplying the contents copy certificate to the contents move source client.

The computer program according to the second aspect of the present invention is the definition of a computer program that is written in a computer-readable form to perform a specified process on a computer system. In other words, when the computer program according to the second aspect of the present invention is installed on a computer system, a cooperative action is performed on the computer system so that a plurality of clients are allowed to share contents while the contents are protected as is the case with the contents distribution system according to the first aspect of the present invention.

Other objects, features, and advantages of the present invention will become apparent from the following description of the preferred embodiments of the present invention and from the accompanying drawings.

Brief Description of Drawings

Fig. 1 is a schematic diagram illustrating a typical configuration of a contents distribution system according to one embodiment of the present invention.

Fig. 2 is a schematic diagram illustrating the hardware configuration of a host device that operates as a server or client.

Fig. 3 is a schematic diagram illustrating the functional configuration of a host device that operates as a client.

Fig. 4 is a schematic diagram illustrating the functional configuration of a host device that operates as a license server.

Fig. 5 is a schematic diagram illustrating the functional configuration of a host device that operates as a contents server.

Fig. 6 is a flowchart illustrating the processing steps that are followed when a client performs a preregistration procedure in relation to a license server.

Fig. 7 is a flowchart illustrating the processing steps that a client performs to download contents.

Fig. 8 is a flowchart illustrating the processing steps that a contents server performs to download contents.

Fig. 9 illustrates a typical data format that is used when contents server A distributes contents to client A.

Fig. 10 is a flowchart illustrating the processing steps that client A performs to reproduce downloaded contents.

Fig. 11 is a flowchart illustrating the processing steps that are performed to acquire a necessary license for allowing client A to reproduce downloaded contents.

Fig. 12 is a schematic diagram illustrating the data structure of a license that a license server supplies to a client.

Fig. 13 is a flowchart illustrating the processing steps that license server A performs to supply a license to client A.

Fig. 14 is a flowchart illustrating the details of the processing steps that a client follows to perform a license update process for a license server.

Fig. 15 is a flowchart illustrating the details of the process that a license server performs to update a license.

Fig. 16 is a flowchart illustrating the processing steps that client A performs to acquire a contents copy certificate from license server A.

Fig. 17 is a flowchart illustrating the processing steps that license server A performs to issue a contents copy certificate in response to a request from client A.

Fig. 18 is a schematic diagram illustrating the data structure of a contents copy certificate.

Fig. 19 is a flowchart illustrating the inter-client contents move processing steps that are performed by client A, which is a contents move source.

Fig. 20 is a flowchart illustrating the processing steps that client B, which is a contents copy destination, performs to acquire contents.

Fig. 21 illustrates a process that is performed when a client uses the contents supplied from a contents server in accordance with a license supplied from a license server.

Fig. 22 illustrates the EKB structure.

Best Mode for Carrying out the Invention

Embodiments of the present invention will now be described with reference to the accompanying drawings.

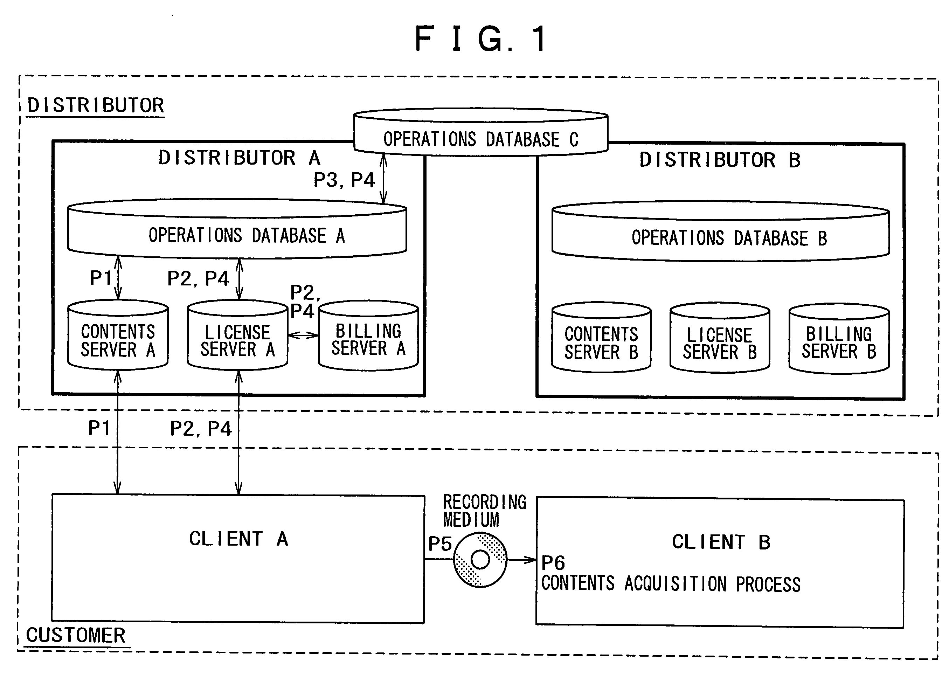

Fig. 1 schematically illustrates a typical configuration of a contents distribution system according to one embodiment of the present invention. In the example shown in the figure, the contents distribution system can be divided into a contents distributor side, which supplies contents, and a customer side. The contents distributor side and customer side are interconnected, for instance, with the Internet or other broadband communications network (xDSL [x Digital Subscriber Line], CATV [Cable TV], wireless network, etc.).

As shown in figure, the contents distributor side includes a plurality of distributors such as distributor A and distributor B.

Each distributor includes a license server, a contents server, a billing server, and an operations database server. The license server provides user (client) registration and contents licensing for each contents reproducing apparatus (hereinafter referred to as a "client") of a customer. The contents server accumulates the contents to be supplied and performs a distribution process. The billing server performs a billing process at the time of user registration and/or license supply (and at the time of contents copy certificate (described later) issuance). The operations database server stores various data necessary for granting a contents license to a customer or client.

In the present embodiment, the distributors are interconnected, for instance, with the Internet or other backbone communications network. Further, operations database server C (DB C) is established to control the operations database of each distributor with a view toward smooth cooperation among distributors.

Operations database server A (DB A) and operations database server B (DB B), which are provided for distributors A and B, respectively, reference operations database server C (DB C), if the user information is not found locally. Servers A and B perform a synchronization process as needed to ensure that updates are reflected in operations database server C. However, operations database server C is optional. It can be substituted by a certain scheme that enables operations database servers A and B to share information.

In the example shown in Fig. 1, distributors A and B have their own license server, billing server, contents server, and operations database server. Alternatively, the distributors may share a certain server or all servers. Another alternative is to let one distributor to use the contents server of the other distributor.

Many customers exist in the contents distribution system. However, in the example shown in Fig. 1, only one customer is shown for drawing simplification purposes. The customer shown in the figure has a plurality of contents reproducing apparatus, including client A and client B. Each client conforms to the "legal" reproducing apparatus conditions, which are defined in conjunction with the DRM technology, and is capable of performing a process without leaking a cryptographic key, contents key, and decrypted contents to the outside.

In the example shown in the figure, client A is preregistered with distributor A and capable of receiving contents and acquiring a license from distributor A. Client B is preregistered with distributor B and capable of receiving contents and acquiring a license from distributor B.

Client A performs a preregistration procedure with respect to license server A and issues a license acquisition request to license server A. Client B performs a preregistration procedure with respect to license server B and issues a license acquisition request to license server B. It is assumed that license servers A and B mutually have a secret key to the other server.

When contents are to be moved from client A to client B, a recording medium onto which the contents are written by client A is moved to client B. An alternative is to transmit the contents via a personal network. However, when contents are to be moved from client A to client B, it is assumed that client A, which is the contents move source, has already purchased the contents (or acquired a license) from a distributor.

In the present embodiment, a user ID is used for user identification (described in detail later). However, a client ID, which identifies an individual client, may be used in place of a user ID. The user ID of a user varies with the service provided by a distributor. However, it is assumed that the user IDs of a specific user are associated with each other (strung together) through the use of various operations databases to permit each distributor to recognize the same user. Client IDs are also managed by operations database servers A, B, and C. In the present embodiment, authentication is conducted using a user ID and password. Alternatively, authentication (device authentication) may be conducted using a client ID (device ID). Another alternative is to handle user information in accordance with a combination of device authentication and user authentication.

The contents distribution system according to the present embodiment is based on the following preconditions:

(1) An environment in which the range of distributed-contents use by customers can be limited according to the will of the contents distributor or copyright owner (copyright management is exercised) is provided;
(2) In the above-mentioned copyright management environment, encrypted contents and the license for decrypting such encrypted contents can be handled independently;
(3) Each client is provided with an information processing method for copyright management and protection ("legal");
(4) Clients receiving contents from various contents distributors differ from each other;
(5) Each client can store received contents in itself or on a recording medium connectable to the client;
(6) When clients share contents, the customer can move the contents between clients via a recording medium or wired or wireless communications link; and
(7) The customer-related information (e.g., the information about customers, clients owned by customers, and purchased contents) that is possessed by various contents distributors can be exchanged or shared.

When the contents acquired by client A are to be stored in client B under the above preconditions, the contents distribution system according to the present invention adds the information about client B ("contents copy certificate" [described later], which contains a client device ID and the like), to the contents so as to identify client B. In this manner, contents sharing is permitted between clients A and B while the contents are protected. However, client A has already purchased the targeted contents from a distributor (or acquired a license). The details of processing steps for contents sharing will be described later.

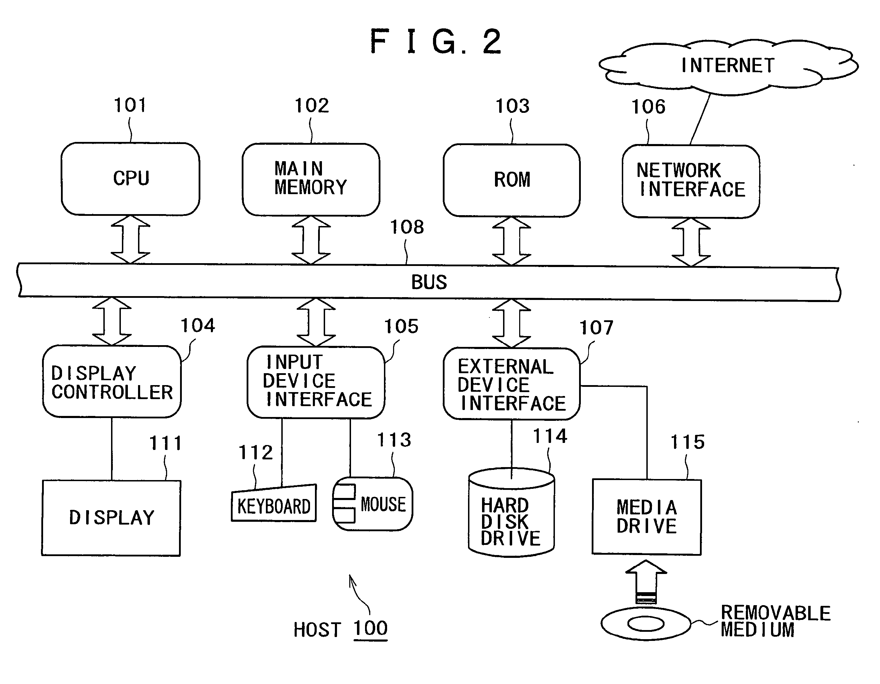

Fig. 2 is a schematic diagram illustrating the hardware configuration of a host device that operates as a server or client in the contents distribution system according to the present embodiment.

The reference numeral 101 denotes a CPU (Central Processing Unit), which serves as a main controller. The CPU 101 executes various applications under the control of an operating system (OS). If the host is a client terminal in the present embodiment, the CPU 101 executes a client application that completes preregistration with a distributor, downloads contents, acquires a license, stores contents, and performs various other operations services. On the other hand, if the host operates as a license server, contents server, billing server, operations database server, or other similar server, the CPU 101 executes various server applications. As shown in the figure, the CPU 101 is interconnected to the other devices (described later) via a bus 108.

The reference numeral 102 denotes a main memory, which is a storage device for loading a program code for execution in the CPU 101 or temporarily storing work data for a program in execution. For example, a DRAM (Dynamic RAM) or other similar semiconductor memory is used as the main memory 102. If the host is a client terminal, the CPU 101 loads a client application for completing preregistration with a distributor, downloading contents, acquiring a license, storing contents, and performing various other operations services into the main memory 102 as the program to be executed. On the other hand, if the host operates as a license server, contents server, billing server, operations database server, or other similar server, the CPU 101 loads various server applications into the main memory 102 as the programs to be executed.

The reference numeral 103 denotes a ROM (Read Only Memory), which is a semiconductor memory for storing data permanently. For example, a self-diagnostic test (POST: Power ON Self Test) for startup and a hardware input/output program code (BIOS: Basis Input/Output System) are written into the ROM 103.

The reference numeral 104 denotes a display controller, which is a dedicated controller for processing a drawing command that is issued by the CPU 101. The drawing data processed by the display controller 103 is temporarily written, for instance, into a frame buffer (not shown) and then output to a display 111 to display an image. The screen of the display 111 visually feeds user input information and its processing results (more specifically, the contents reproduction screen) or error and other system messages back to the user.

The reference numeral 105 denotes an input device interface, which is a device for connecting a keyboard 112 and a mouse 113 or other user input device to an interactive device 100.

The reference numeral 106 denotes a network interface, which complies with the Ethernet (registered trademark) or other similar predetermined communications protocol and enables a system 100 to connect to a local network such as a LAN (Local Area Network) or a wide-area network such as the Internet. In the case of a vehicle-mounted terminal or the like, the network interface 106 may be an interface for connecting to a wide-area network via a cellular phone or other similar wireless communications link.

Within the network, a plurality of host terminals (not shown) are interconnected in a transparent state to establish a distributed computing environment. Distribution services for distributing, for instance, software programs and data contents can be performed within the network.

For instance, if the host is a client terminal, it is possible to download a client application for completing preregistration with a contents distributor, downloading contents, acquiring a license, storing contents, and performing various other operations services. It is also possible to download via the network various procedures including those for completing preregistration with a contents distributor, downloading contents from a contents server, acquiring a license from a license server, and performing a billing process in relation to an acquired license. Further, it is possible to execute an uncompiled source program and a compiled object program via the network. If the host operates as a license server, contents server, billing server, or operations database server, it is possible to download various server applications via the network and execute via the network various procedures including those for completing preregistration with a customer's client terminal, distributing contents, supplying a license, and performing a billing process in relation to a supplied license.

The reference numeral 107 denotes an external device interface, which connects a hard disk drive (HDD) 114, a media drive 115, and other external devices to the host 100.

The hard disk drive 114 is an external storage device (widely known) in which a fixed magnetic disk for storage use is mounted. It is superior to the other external storage devices, for instance, in storage capacity and data transfer rate. Placing a software program on the hard disk dive 114 in an executable manner is called the "installation" of the program on the system. Under normal conditions, the hard disk drive 114 stores the program codes of an operating system to be executed by the CPU 101, application programs, device drivers, and the like in a nonvolatile manner.

For instance, if the host is a client terminal, it is possible to install onto the hard disk drive 114 a client application and the like for completing preregistration with a contents distributor, downloading contents, acquiring a license, storing contents, and performing various other operations services. It is also possible to store on the hard disk drive 114 the contents downloaded from a contents distributor (or the contents moved from another client terminal via a recording medium or the like), a contents license, and the like. Further, if the host operates as a license server, contents server, billing server, operations database server, or other similar server, it is possible to install various server applications onto the hard disk drive 114 and store customer-related information (the information about customers, clients owned by the customers, purchased contents, etc.) necessary for contents distribution operations on the hard disk drive 114.

The media drive 115 accepts removable media such a CD (Compact Disc), MO (Magneto-Optical disc), and DVD (Digital Versatile Disc) and accesses its data recording surface.

The removable media are mainly used to back up a software program and data file in a computer-readable form and transfer (for selling, distributing, circulating, and other similar purposes) a software program and data file between systems. For example, the removable media can be used to physically distribute or circulate a client application for completing preregistration with a contents distributor, downloading contents, acquiring a license, storing contents, and performing various other operations services and various server applications among a plurality of devices. The removable media can also be used to move the contents downloaded from a contents distributor between client terminals. Further, the distributors can use the removable media to exchange or share customer-related information (the information about customers, clients owned by the customers, purchased contents, etc.) that is required for contents distribution operations.

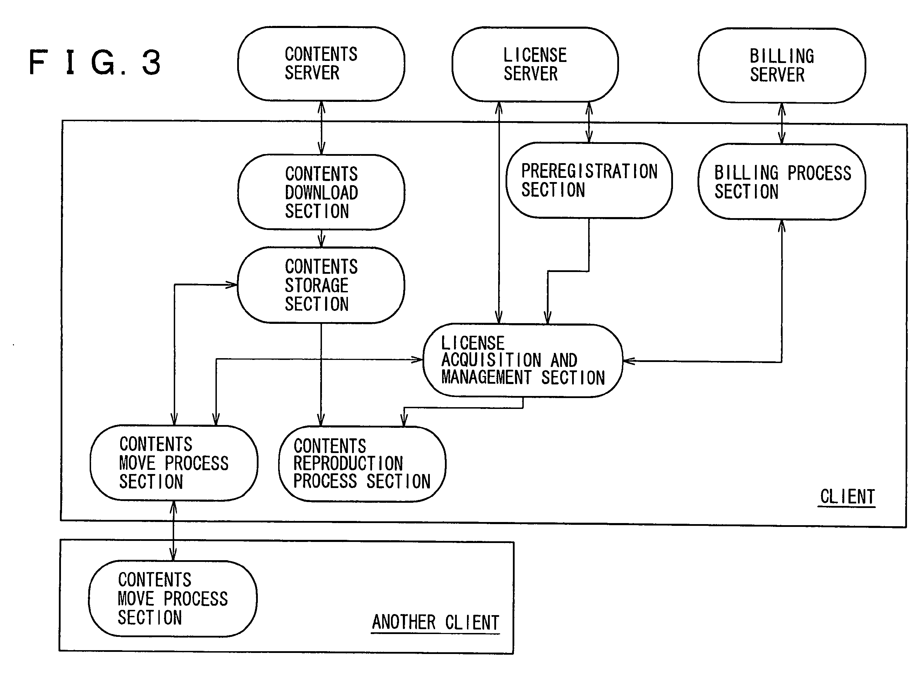

Fig. 3 schematically illustrates the functional configuration of a host that operates as a client. As shown in the figure, the client includes a preregistration section, a contents download section, a contents storage section, a contents move process section, a license acquisition and management section, a billing process section, and a contents reproduction process section. The functional modules shown in the figure are actually implemented, when the CPU 101 executes predetermined program modules.

The preregistration section performs a preregistration process with respect to a license server on the presumption that the client receives contents from a specific distributor and acquires the license for the contents. The details of the preregistration process will be described later.

The contents download section performs a process for downloading desired contents from the contents server of a distributor for which the preregistration process has been performed. Under normal conditions, the contents download begins after the user selects contents from the client's browser screen. The contents download process will not be described in detail, because it is widely known. The downloaded contents are stored in the contents storage section.

The license acquisition and management section acquires from the license server a license required for using the contents downloaded from the contents server or the contents acquired from another client of the same user via the contents move process section. Further, the license acquisition and management section manages the acquired license as well as the information acquired at the time of preregistration.

If the acquired license has expired, the license acquisition and management section performs a license update process in relation to the license server. The license acquisition process and license update process will be described in detail later.

When the downloaded contents are to be moved (copied) to another client of the same user, the license acquisition and management section acquires a contents copy certificate from the license server. In addition, the license acquisition management section records the serial number of the acquired contents copy certificate as a "used contents copy certificate". The contents copy certificate acquisition process will be described in detail later.

When contents are copied from another client with a contents copy certificate attached, the license acquisition and management section stores a license that is obtained from the contents copy certificate.

The billing process section connects to the billing server of a distributor and performs a payment-related process on the price for acquiring a license for using contents (contents reproduction) and on the price for acquiring a contents copy certificate. The contents are downloaded from the contents server or acquired from another client of the same user via the contents move process section.

In the present embodiment, the acquisition of a contents copy certificate may be charged or free of charge. When the acquisition of a contents copy certificate is charged, the price may be rendered lower than that for normal license acquisition. These judgments are to be formulated by the associated contents distributor and controlled by the billing server.

The contents reproduction process section obtains desired contents from the contents storage section, decrypts and decodes encrypted contents data using a license stored in the license acquisition and management section (or a license obtained from a contents copy certificate), and performs a process for reproducing the contents. The contents reproduction process may be performed to sound music data or display video data on the display screen.

The contents move process section moves contents between clients of the same user. When the contents move from one client to another, the contents move process section accesses the contents storage section to obtain the target contents, attaches a contents copy certificate, which is acquired from the license server, to the contents, and writes the contents onto a removable recording medium or transfers the contents via a wired or wireless communication path.

On the contrary, when the moved contents are acquired from another client, the contents move process section reads the contents from an inserted recording medium or receives the contents via a wired or wireless communication path. The contents moved in this manner are stored in the contents storage section. In this instance, the contents move process section obtains a license from the contents copy certificate attached to the contents and stores the license in the license acquisition and management section.

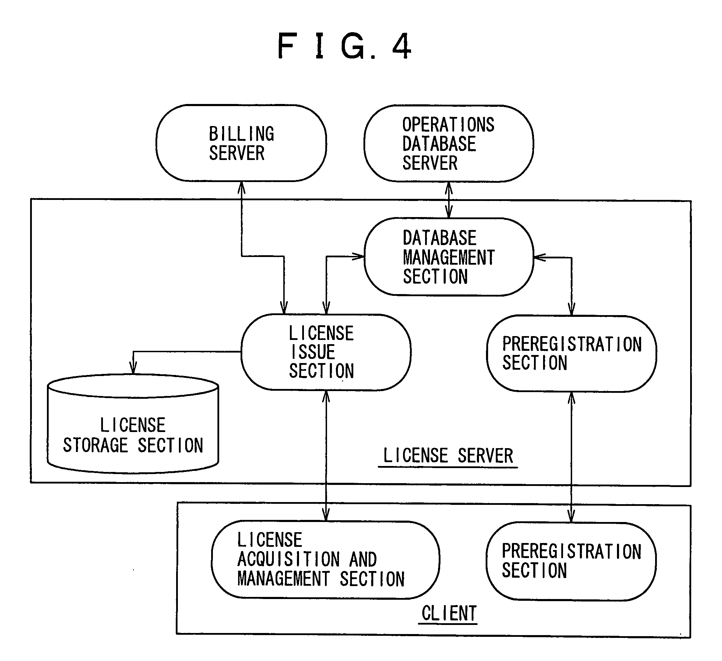

Fig. 4 schematically illustrates the functional configuration of a host that operates as a license server. As shown in the figure, the license server includes a preregistration section, a license issue section, a license storage section, and a database management section. The functional modules shown in the figure are actually implemented when the CPU 101 executes predetermined program modules.

The preregistration section performs a preregistration process for a client on the presumption that the client uses the contents distribution service of a distributor. The preregistration process will be described in detail later.

The license storage section stores licenses that are required for contents to be supplied from distributors. Each license can be searched for using a license ID and other license designation information.

The license issue section accesses the license storage section to obtain a license that a client needs for the use of downloaded contents and transmits the obtained license to the client who generated a request for the license. Further, the license issue section sends a notification to the billing server, because the client is to be billed for the issued license. The license issue section also has a function for adding a leaf ID to a license (a function for processing a license obtained from the license storage section).

When the user moves contents from one client to another, the license issue section issues a contents copy certificate for indicating that the contents move is legal. The license issue section transmits the certificate to the client from which the contents move. In connection with the issuance of the contents copy certificate, the license issue section sends a notification to the billing server for the purpose of client billing.

In the present embodiment, the acquisition of a contents copy certificate may be charged or free of charge. When the acquisition of a contents copy certificate is charged, the price may be rendered lower than that for normal license acquisition. These judgments are to be formulated by the associated contents distributor and controlled by the billing server.

Further, the license issue section performs a license update process in compliance with a client's request for updating a license that has expired. The license update process will be described in detail later.

The database management section registers the preregistration entries in the preregistration section and the information about licenses issued by the license issue section with the operations database. Then, the database management section updates such registered information.

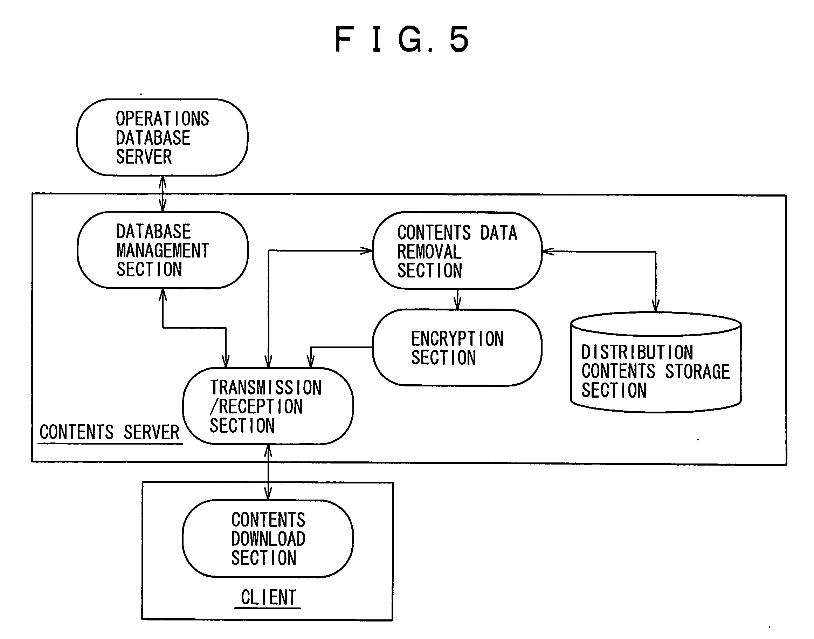

Fig. 5 schematically illustrates the functional configuration of a host that operates as a contents server. As shown in the figure, the contents server includes a transmission/reception section, a distribution contents storage section, a contents removal section, and an encryption section. The functional modules shown in the figure are actually implemented, when the CPU 101 executes predetermined program modules.

The transmission/reception section receives a contents request (the information for specifying the contents) from a client and transmits specified contents data to a requesting client.

The distribution contents storage section stores and manages the contents data that a distributor handles to provide a distribution service. In the present embodiment, the contents data is encoded in ATRAC3 (Adaptive Transform Acoustic Coding 3) format and stored in the distribution contents storage section.

The contents removal section analyzes the information for specifying the contents, which is received by the transmission/reception section, obtains specified contents from the distribution contents storage section, and passes the contents to the encryption section.

The encryption section uses the contents key $K_c$ to encrypt the contents to be distributed to clients.

The database management section registers the information about the contents distribution service performed in relation to clients. Then, the database management section updates such registered information.

Prior to contents share processing, clients A and B access license servers A and B, respectively, to perform a preregistration process. The preregistration process is performed to acquire "service data", which contains a leaf ID, a DNK (Device Node Key), a pair of a secret key and a public key for each client, a license server public key, and a certificate of each public key.

The leaf ID represents identification information that is assigned to each client. The DNK is a device node key that is required for decrypting an encrypted contents key $K_c$, which is contained in an EKB (enabling key block) corresponding to the license for a client. The DNK is described in WO Description 02/080446, the patent described in which is already assigned to the applicant of the present invention. However, the DNK is not described herein, because it is not directly relevant to the scope and spirit of the present invention.

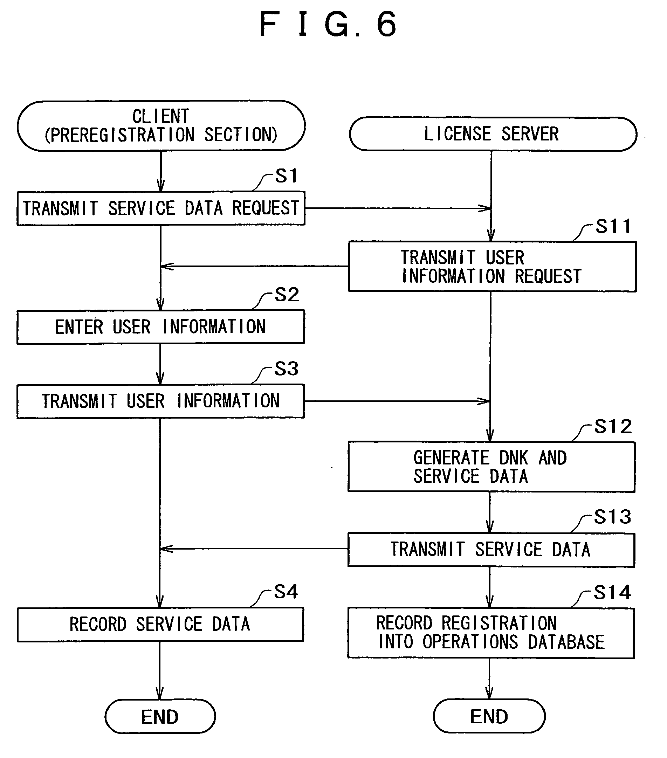

Fig. 6 is a flowchart illustrating the processing steps that are followed when a client performs a preregistration procedure in relation to a license server.

The client transmits a service data request to the license server of a contents distributor, because the client is to be registered with that license server (step S1).

Upon receipt of the service data request from the client, the license server transmits a user information request to the client in response to the client's request (step S11).

Upon receipt of the user information request, the client causes a display device or the like to display a message for prompting for user information input and open a user information input window (step S2). When the user enters the user's personal information, payment information, and other user information via a keyboard, mouse, or other input device, the entered user information is transmitted to the license server (step S3). (In the present embodiment, authentication is conducted using a user ID and password. Alternatively, authentication [device authentication] may be conducted using a client ID [device ID]. Another alternative is to handle user information in accordance with a combination of device authentication and user authentication.)

Upon receipt of the user information, the license server checks the leaves under a node having a category assigned to the license server and assigns an unassigned leaf to the requesting client. The license server generates a set of node keys assigned to nodes in the path between the leaf and the node having a category assigned to the license server as a device node key DNK. Step S12 is then performed to generate service data, which contains the generated DNK, the leaf ID of the leaf assigned to the client, the pair of the client's secret key and the public key, the license server's public key, and the certificate of the public key. Next, step S13 is performed to transmit the service data to the requesting client.

After service data transmission, the license server records the association between the user information and leaf ID and writes the preregistration into the operations database (step S14).

Upon receipt of the service data from the license server, the client encrypts the data and causes the license acquisition and management section to store the data (step S4).

As described above, the license server registers the client and user. The client can now receive the service data, which contains a device node key required for using a desired contents distribution service.

In the present embodiment, operations database servers A and B of each distributor possess a plurality of tables for managing customer-related information. The contents server and other similar subsystems can use (e.g., reference, add an entry to, and rewrite) the tables, which are summarized below:

(1) Table defining the association between leaf IDs and client Ids;
(2) Table defining the association between client IDs and client public key certificates;
(3) Table defining the association between client IDs and user Ids;
(4) Table defining the association between user IDs and user passwords;
(5) Table defining the association between contents IDs and license Ids;
(6) Table defining the association between user IDs and contents IDs of downloaded contents (including download dates/times and license IDs);
(7) Table defining the association between user IDs and license IDs of downloaded licenses (including download dates/times); and
(8) Contents copy certificate issue history.

Operations database server C is installed so that the distributors can share the following items of customer-related information that is stored in operations database servers A and B. Distributors A and B can reference or update the following information as needed:

(1) Table defining the association between leaf IDs and client Ids;
(2) Table defining the association between client IDs and client public key certificates;
(3) Table defining the association between client IDs and user Ids;
(4) Table defining the association between contents IDs and license Ids;
(5) Table defining the association between user IDs and contents IDs of downloaded contents (including download dates/times and license IDs); and
(6) Table defining the association between user IDs and license IDs of downloaded licenses (including download dates/times).

When contents acquired by client A are to be stored in client B, the contents distribution system according to the present embodiment adds a "contents copy certificate" to the contents, thereby making client B identifiable. Clients A and B are then allowed to share the contents while ensuring that the contents are protected.

As shown in Fig. 1, the above contents sharing is achieved by performing procedures P1 through P6, which are summarized below. However, it is assumed that the contents to move have already been purchased from a distributor by client A (or the license for the contents has already been acquired by client A). It is also assumed that license servers A and B have already memorized the secret keys of each other. Also, the client IDs of the clients are associated with a user ID and recorded in the operations database.

P1: Downloading the contents
P2: Downloading a license and reproducing the contents
P3: Updating the information in the operations database
P4: Issuing a contents copy certificate
P5: Copying the contents and contents copy certificate to a recording medium
P6: Performing a process for acquiring the contents

The procedures will be described below in sequence.

<u>Downloading the contents</u>

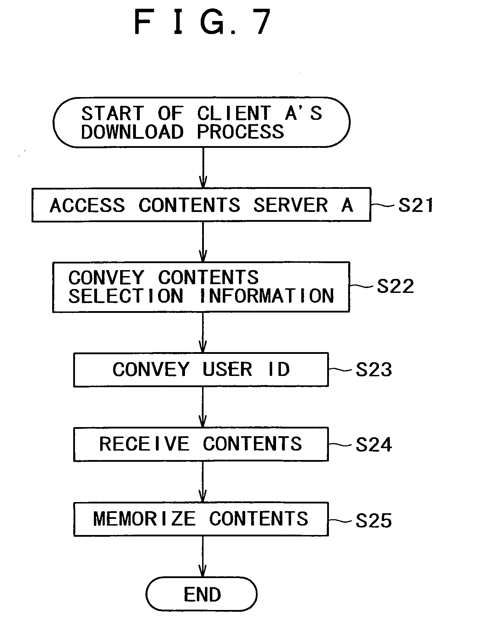

Fig. 7 is a flowchart illustrating the processing steps that client A performs to download contents.

The user manipulates the display screen with the keyboard, mouse, or other input device to start a contents download process starts. In response to the start of the contents download process, step S21 is performed to access contents server A via the network interface 106.

When contents server A is accessed as describe above, a contents selection window (not shown) appears on the client's display screen. From the contents selection window, the user selects desired contents with the keyboard, mouse, or other input device. Client A then conveys contents selection information to contents server A (step S22). Contents server A is also informed of the user ID (step S23).

As described later, contents server A encrypts and transmits the selected contents in compliance with the conveyed contents selection information. Client A receives the encrypted contents (step S24) and stores the contents in the contents storage section (step S25).

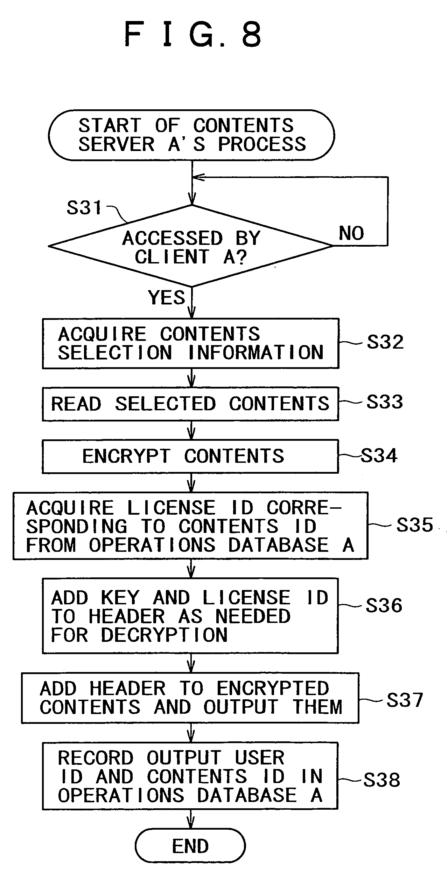

Fig. 8 is a flowchart illustrating the processing steps that a contents server performs to download contents.

Contents server A stands by until it is accessed by client A (step S31). When contents server A finds to be accessed, server A acquires contents selection information, which is transmitted from client A (step S32). The contents selection information corresponds to the information that client A conveyed in step S22 of the flowchart in Fig. 7.

Next, contents server A checks the stored contents to read the contents that are specified by the information acquired in step S32 (step S33).

Step S34 is then performed to encrypt the read contents with the contents key $K_c$. Since the contents data stored in the distribution contents storage section is already encoded in ATRAC3 format, the encoded contents data now encrypted. Step S34 can be omitted, if the contents data is encrypted and stored in the distribution contents storage section in advance.

Next, step S35 is performed to acquire a license ID, which corresponds to a contents ID, from operations database A. Step S36 is then performed to add key information (described later), which is necessary for decrypting the encrypted contents, and the license ID, which identifies the license necessary for using the contents, to a header that composes a format for transmitting the encrypted contents data.

The contents encrypted in step S34 and the header to which the key and license ID was added in step S36 are then formatted to generate data. The data generated in this manner is transmitted to requesting client A (step S37).

Finally, step S38 is performed so that operations database A records the user ID of client A and the contents ID of the transmitted contents. A synchronization process is performed so that the information recorded in operations database A is reflected in operations database C and can also be used by distributor B.

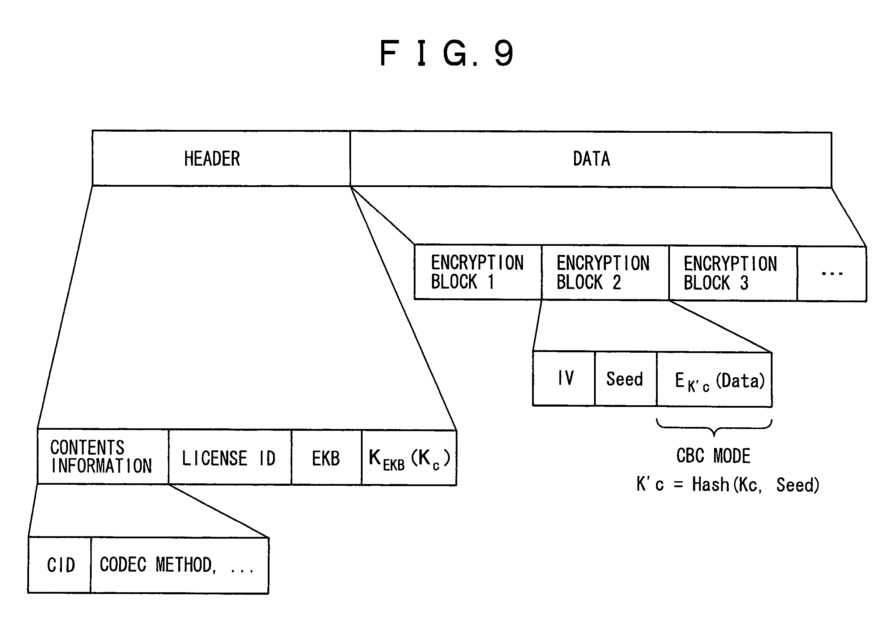

Fig. 9 illustrates a typical data format that is used when contents server A distributes contents to client A. As shown in the figure, the format includes a header and data.

The header includes contents information, a license ID, an Enabling Key Block (EKB), and data $K_{EKB}$ ($K_c$), which serves as the contents key $K_c$ that is encrypted with the key $K_{EKB}$ generated from the EKB. The EKB is described in WO Description 02/080446, the patent described in which is already assigned to the applicant of the present invention. However, the EKB is not described herein, because it is not directly relevant to the scope and spirit of the present invention.

The contents information includes a contents ID (CID) and the information about a codec method applied to the contents. The contents ID serves as the identification information for identifying contents data that is formatted as the data.

The data includes an arbitrary number of encryption blocks. Each encryption block includes an initial vector (IV), a seed, and data $E_{K'_c}$ (Data), which is obtained by encrypting the contents data with the key $K'_c$.

As indicated in the following equation, the key $K'_c$ includes the contents key $K_c$ and a value calculated with a hash function applied to a seed that is set by a random number.

$$K'_c = \text{Hash} (K_c, \text{Seed})$$

The initial vector (IV) and seed are set to values that vary from one encryption block to another.

With the contents data divided into 8-byte segments, the above encryption process is performed on each 8-byte segment. Encryption is conducted in CBC (Cipher Block Chaining) mode, in which the latter 8 bytes are encrypted using the result of encryption of the former 8 bytes.

When the former 8-byte contents data is to be encrypted in CBC mode, the result of encryption of the preceding 8 bytes is not available. Therefore, the former 8-byte contents data is encrypted with the initial vector (IV) employed as the initial value.

Even if one encryption block is decrypted in a situation where encryption is conducted in CBC mode, the other encryption blocks remain unaffected by such decryption. The encryption process sequence is described in WO Description 02/080446, the patent described in which is already assigned to the applicant of the present invention. However, the encryption process sequence is not described herein, because it is not directly relevant to the scope and spirit of the present invention. The encryption method is not limited to the above. Alternatively, the contents data may be encrypted simply with the contents key $K_c$.

As described above, client A can freely acquire contents from contents server A. To use (reproduce) contents, it is necessary to separately acquire the license for the contents. In the present embodiment, therefore, the acquisition of a license is charged, but the distribution of contents is rendered free of charge. It means that the contents are free of charge and can be distributed in large quantities.

Downloading a license and reproducing the contents

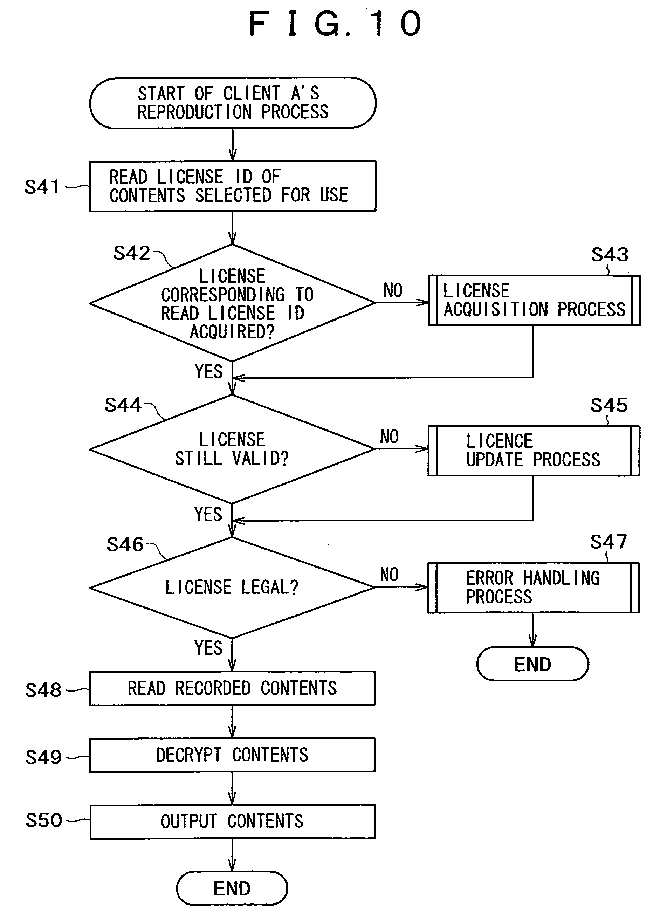

Fig. 10 is a flowchart illustrating the processing steps that client A performs to reproduce downloaded contents.

First of all, client A acquires the identification information (CID) about contents that the user has specified by operating a keyboard, mouse, or other input device (step S41). The identification information acquired in this manner includes, for instance, a contents title and a number assigned to each of the stored contents.

When the contents are specified, the license ID corresponding to the contents (license identification information required for using the contents) is read. As shown in Fig. 9, the license ID is written in the header for encrypted contents data.

Next, step S42 is performed to judge whether the license corresponding to the read license ID is already acquired by the client and stored in the license acquisition and management section. If the license is not acquired yet, step S43 is followed to perform a license acquisition process (described later).

If it is judged in step S42 that the license is already acquired or if the license is acquired as a result of the license acquisition process that was performed in step S43, step S44 is performed to judge whether the acquired license has not expired. This judgment can be formulated by comparing the current time maintained by the client's system timer against the expiration date (described later) that is defined as an element of the license.

If it is judged that the license has already expired, step S45 is followed to perform a license update process (described later).

If it is judged in step S44 that the license is still valid or if the license is updated in step S45, step S46 is performed to judge whether the license is legal. An electronic signature (described later) contained in the license checks license validity. If the license is illegal, an error handling process is performed (step S47) to terminate the entire processing routine. The error handling process may alternatively be performed so as to newly acquire a legal license.

If it is judged in step S46 that the license is legal, step S48 is performed to read the associated encrypted contents data from the contents storage section. The encrypted contents data is then decrypted with the contents keys $K_c$ (step S49). This decryption is conducted for each of the encryption blocks arranged in the data section shown in Fig. 9.

Further, the decrypted contents data are decoded to perform a contents reproduction process (step S50). The contents reproduction process is performed so as to sound music data or display video data on the display screen.

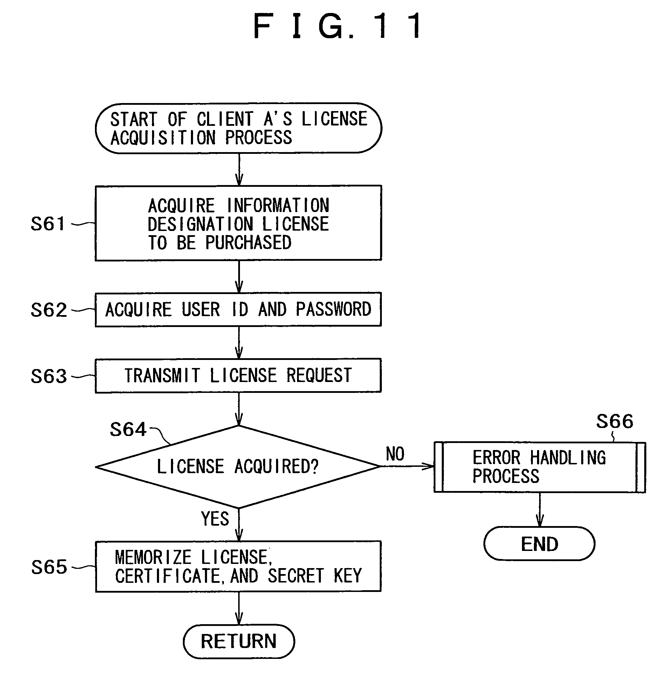

Fig. 11 is a flowchart illustrating the details of the license acquisition process that is performed in step S43 of the flowchart shown in Fig. 10.

As described earlier, client A has already accessed license server A to complete a registration process and acquire service data, which contains a leaf ID, DNK (Device Node Key), pair of client A's secret key and public key, license server's public key, and public key certificate (see Fig. 6).

The leaf ID represents identification information that is assigned to each client. The DNK is a device node key that is required for decrypting an encrypted contents key $K_c$, which is contained in an EKB (enabling key block) corresponding to the license for a client.

First of all, client A operates the user's keyboard, mouse, or other input device to enter a user ID, a password, and the information designating the license to be updated (steps S61 and S62).

Next, client A transmits a license request, which contains the entered user ID, password, and license designation information in addition to the leaf ID contained in the service data, to license server B (step S63).

License server A issues a license in accordance with the user ID, password, and license designation information. Then, server A transmits the license to requesting client A. The license supply process performed by license server A will be described in detail later.

If client A can receive the license from license server A (step S64), the license acquisition and management section stores the license (step S65).

On the other hand, if client A cannot receive the license from license server A (step S64), a predetermined error handling process is performed (step S66) to terminate the entire processing routine. Typically, the error handling process may be performed to inhibit the contents reproduction section from starting up, because the license for contents use cannot be obtained.

As described above, client A acquires the license corresponding to the license ID that is attached to the contents data and is now able to use the contents.

The license acquisition process shown in Fig. 11 may be performed before a contents download instead of after it.

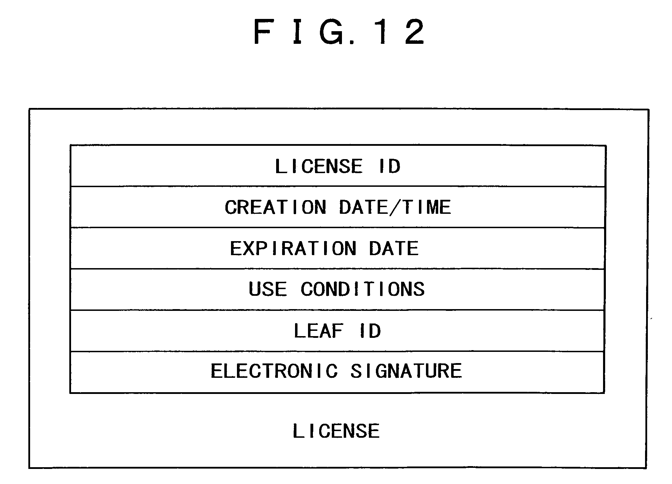

Fig. 12 schematically illustrates the data structure of a license that a license server supplies to a client. As shown in the figure, the license includes use conditions, leaf ID, and license server electronic signature.

The use conditions contain the license information about a usage period during which the license permits the use of the contents, a download period during which the license allows the contents to be downloaded, the number of times the license permits the contents to be copied (maximum permissible copy count), a checkout count, a maximum checkout count, the right to record the contents on a CD-R or like recording medium, the number of times the contents can be copied onto a removable recording medium, the right to transform the license to ownership (purchase of the contents), and the obligation to keep a use log.

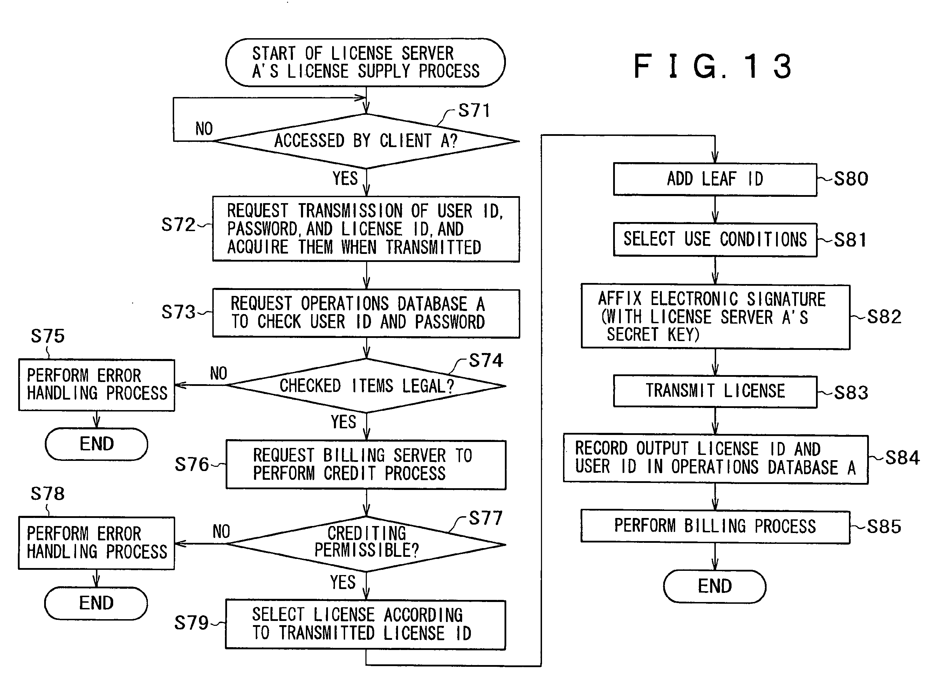

Fig. 13 is a flowchart illustrating the processing steps that license server A performs to supply a license to client A in compliance with client A's license request (step S63 of the flowchart shown in Fig. 11).

License server A stands by until it is accessed by client A (step S71). When accessed by client A, license server A requests client A to transmit a user ID, password, and license ID. Step S63 is then performed in response to the request from license server A so that client A transmits the user ID, password, leaf ID, and license designation information (license ID) to license server A. License server A then acquires such transmissions (step S72).

Next, license server A requests operations database server A to perform a check process on the user ID and password (step S73) to judge whether client A is legal (step S74). If the check process is unsuccessful, a predetermined error handling process is performed (step S75) to terminate the entire processing routine. In this instance, license server A does not issue a license to client A.

On the other hand, if the check process is successfully done, license server A accesses billing server A and requests billing server A to perform a credit process (step S76). In compliance with the credit process request from license server A, billing server A examines the past payment records and other relevant history concerning the user ID and password to check for objectionable user records such as the user's failure to pay for a license (step S77).

If it is found that crediting is not appropriate, for instance, due to an objectionable payment record, billing server A transmits a credit result to license server A to indicate that the license cannot be granted. In response to the transmitted credit result, license server A performs a predetermined error handling process (step S78) and terminates the entire processing routine. In this instance, the license does not issue to client A.

On the other hand, if it is found that crediting is permissible, the license corresponding to the license designation information is obtained from the license storage section (step S79). Within the license stored in the license storage section, a license ID, version, creation date/time, expiration date, and other relevant information are written.

License server A adds a leaf ID to the obtained license (step S80).

Next, license server A selects use conditions that are associated with the license (step S81), or if the use conditions were specified by the user at the time of a license request, the specified conditions are added as needed to the prepared use conditions. The selected use conditions are then added to the license.

Next, license server A generates a license, as shown in Fig. 12, by affixing an electronic signature to the license with its own secret key (step S82). Then, license server A transmits the generated license to requesting client A (step S83).

License server A then associates and memorizes the transmitted license (including the use conditions and leaf ID) with the user ID and password. Further, license server A accesses operations database server A, associates and records the license ID of the transmitted license with the user ID (step S84). A synchronization process is performed so that the information recorded in operations database A is reflected in operations database C and can also be used by distributor B.

Finally, license server A accesses billing server A and requests that a billing process be performed on the user corresponding to the user ID and password (step S85).

In compliance with the above billing process request, billing server A performs a billing process on the user. For example, billing server A may provide credit settlement based, for instance, on a credit card, immediate settlement based on a debit card, payment in electronic money, payment in cash, and payment through a financial institution transfer. However, the style of billing process will not be further described, because it is not directly relevant to the scope and spirit of the present invention.

If the user does not pay in response to the billing process, the user loses his/her credit and will not acquire a license even if he/she makes a request for a license issue in the future. More specifically, if the user loses his/her credit, the billing server, transmits a credit result as described above to indicate that a license cannot be granted. Therefore, the license server performs an error handling process in step S78. The error handling process generates a message to indicate that a license cannot be granted, for instance, to a requesting client and then terminates. The requesting client cannot use the contents (achieve decryption), because it cannot receive a license.

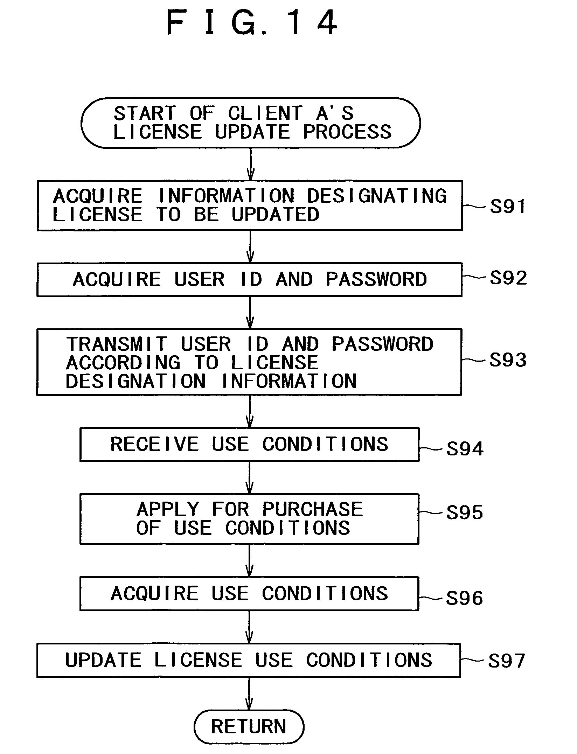

Fig. 14 is a flowchart illustrating the details of the procedure that a client follows to perform a license update process in relation to a license server in step S45 of the flowchart shown in Fig. 10.

First of all, client A operates the user's keyboard, mouse, or other input device to enter license designation information, user ID, and password (steps S91 and S92).

Next, client A transmits a license update request, which contains the entered user ID, password, and license designation information, to a license server (step S93).

License server A presents use conditions (described later) in response to the license update request. Client A then receives the presented use conditions and displays the conditions to the user (step S94).

The user operates the keyboard, mouse, or other input device to select desired use conditions from those displayed on screen and/or add desired use conditions as needed. The application for purchasing the use conditions selected in this manner (license update conditions) is then transmitted to license server A (step S95).

In response to the purchase application from client A, license server A transmits final use conditions (described later). Client A then receives the use conditions from license server A (step S96) and uses the conditions as a license use condition update (step S97).

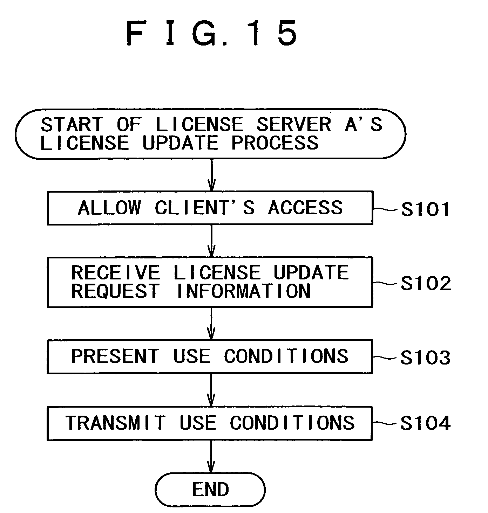

Fig. 15 is a flowchart illustrating the details of the process that a license server performs in step S45 of the flowchart shown in Fig. 10 (Fig. 14) to update a license that has expired.

When client A accesses license server A (step S101), license server A receives the above-mentioned license update request that is transmitted from client A (step S102).

License server A then accesses the license storage section to read the use conditions (the use conditions to be updated) corresponding to the license that is designated by the update request and transmits the read use conditions to requesting client A (step S103).

Client A displays the received use conditions to the user. The user then operates the keyboard, mouse, or other input device to select desired use conditions from those displayed on screen and/or add desired use conditions as needed. The application for purchasing the use conditions selected in this manner (license update conditions) is then transmitted to license server A (as described earlier).

Upon receipt of the use condition purchase application from client A, license server A generates data corresponding to the use conditions designated by the application and transmits the generated data to client A (step S104). Client A receives the use conditions from license server A and uses the conditions as a license use condition update (as described earlier).

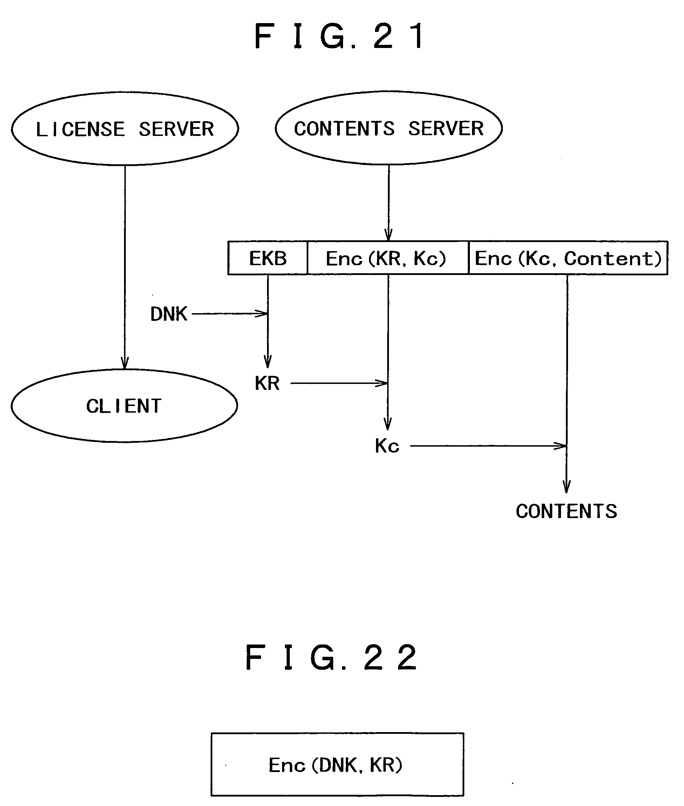

The mechanism of a process in which a client uses contents supplied from the contents server in accordance with a license supplied from the license server will now be summarized with reference to Fig. 21.

The contents server supplies contents to the client, and the license server supplies a license to the client. The contents are encrypted by the contents key $K_c$ (Enc [$K_c$, Contents]). The contents key $K_c$ is encrypted by the root key KR (which is derived from the EKB and corresponds to the key $K_{EKBC}$ within the contents data shown in Fig. 9) (Enc [KR, $K_c$]). The contents key $K_c$ is encrypted together with the EKB and added to the contents, which are then supplied to the requesting client.

The EKB indicated in the example shown in Fig. 21 contains the rook key KR (Enc [DNK, KR]), which can be decrypted by the DNK as indicated, for instance, in Fig. 22. Therefore, the client can acquire the root key KR from the EKB by using the DNK that is contained in the service data. Further, the root key KR can be used to achieve decryption to derive the contents key $K_c$ from Enc (KR, $K_c$). The contents key $K_c$ can then be used to achieve decryption to derive the contents from the encrypted contents Enc ($K_c$, Content).

Updating the information in the operations database

When a contents download or license download is performed between client A and contents distributor A, its information is recorded in operations database A within distributor A. To permit contents sharing between clients A and B of the same customer within the contents distribution system according to the present embodiment, distributors A and B cooperate so that the information update of operations database A is reflected in operations database C and made available to distributor B as well.

When a contents download or license download is completed from distributor A to client A, operations databases A and C update the associated entries in the following tables:

(1) Table defining the association between leaf IDs and client Ids;
(2) Table defining the association between client IDs and client public key certificates;
(3) Table defining the association between client IDs and user Ids;
(4) Table defining the association between contents IDs and license Ids;
(5) Table defining the association between user IDs and contents IDs of downloaded contents (including download dates/times and license IDs); and
(6) Table defining the association between user IDs and license IDs of downloaded licenses (including download dates/times).

Issuing a contents copy certificate

At the time of a contents copy certificate issue, client A has already purchased the contents targeted for a move from a distributor (or acquired the associated license). To let client B use the contents downloaded into client A, a "contents copy certificate" is acquired. The contents copy certificate permits one client to copy contents to another client.

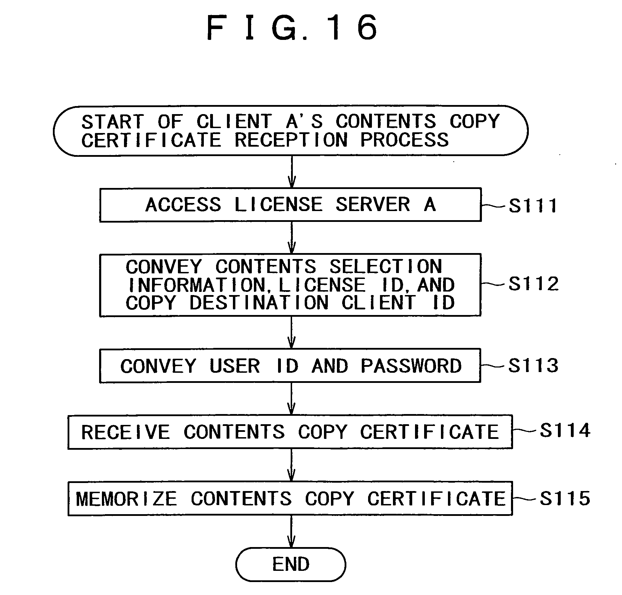

Fig. 16 is a flowchart illustrating the processing steps that client A performs to acquire a contents copy certificate from license server A.

The user manipulates the display screen with the keyboard, mouse, or other input device to start a contents copy certificate issue process. In response to the start of the contents copy certificate issue process, step S111 is performed to access license server A via the network interface 106.

When license server A is accessed as describe above, a contents selection window (not shown) appears on the client's display screen. From the contents selection window, the user selects desired contents with the keyboard, mouse, or other input device and enters a license ID and the client ID of a copy destination client (client B in the present case). Client A then conveys contents selection information, license ID, and copy destination client ID to license server A (step S112). Further, client A informs license server A of its own user ID and password (step S113).

License server A then issues a contents copy certificate and transmits the certificate to client A. Client A receives (step S114) and memorizes (step S115) the transmitted contents copy certificate.

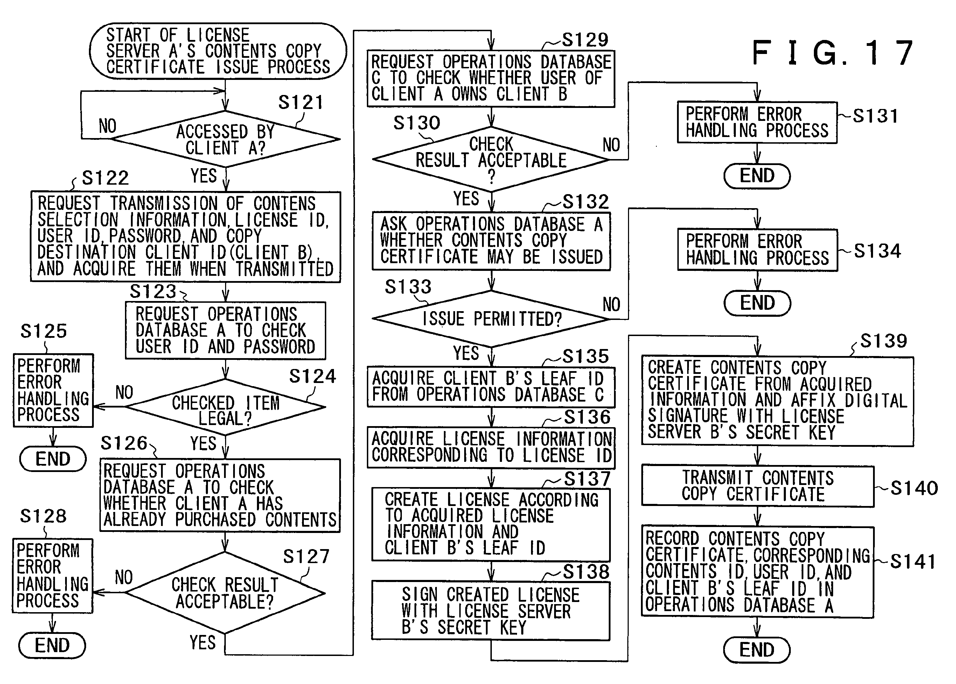

Fig. 17 is a flowchart illustrating the processing steps that license server A performs to issue a contents copy certificate in response to a request from client A.

License server A stands by until it is accessed by client A (step S121). When it is accessed by client A, license server A requests client A to transmit contents selection information, license ID, user ID, password, and copy destination client ID. In compliance with such a request, client A performs steps S112 and S113 to transmit the requested information. License server A then acquires the requested information (step S122).

Next, license server A requests operations database server A to perform a check process on the user ID and password (step S123) to judge whether client A is legal (step S124). If the check process is unsuccessful, a predetermined error handling process is performed (step S125) to terminate the entire processing routine. In this instance, the contents copy certificate does not issue to client A.

On the other hand, if the check process performed in step S124 is successful, license server A requests operations database server A to perform a check process (step S126) to judge whether client A has already purchased the selected contents (has already acquired the associated license) (step S127).

If the above check process is unsuccessful, a predetermined error handling process is performed (step S128) to terminate the entire processing routine. In this instance, the contents copy certificate does not issue to client A. The error handling process in step S127 may be performed to acquire a legal license.

On the other hand, if the check process in step S127 is successfully done, operations database server C is requested to perform a check process (step S129) to judge whether the user of client A actually owns client B, which is indicated by the client ID received in step S122 (step S130).

If the check process is unsuccessful, a predetermined error handling process is performed (step S131) to terminate the entire processing routine. In this instance, the contents copy certificate does not issue to client A. The error handling process in step S131 may be performed to newly preregister client B.

On the other hand, if the check process in step S130 is successfully done, operations database server A is requested to perform a confirmation process (step S132) to judge whether the contents copy certificate may be issued to permit requesting client A to copy the contents to client B (step S133).

If the above confirmation process is unsuccessful, a predetermined error handling process is performed (step S134) to terminate the entire processing routine. In this instance, the contents copy certificate does not issue to client A.

On the other hand, if the confirmation process in step S133 is successfully done, operations database server C is accessed to acquire the leaf ID of client B (step S135). Step S136 is then performed to acquire license information corresponding to the license ID that was acquired in step S122. Next, step S137 is performed in accordance with the acquired license information and the leaf ID of client B to create a license that permits client B to use the contents. The structure of the created license is as shown in Fig. 12.

Next, license server A uses the secret key of license server B to affix an electronic signature to the created license (step S138).

The information acquired in step S122 is then used to create the contents copy certificate, and an electronic signature is affixed to the certificate by using the secret key of license server B (step S139). License servers A and B have the secret keys of each other (as described earlier).

Next, license server A transmits the contents copy certificate, to which an electronic signature is affixed, to requesting client A (step S140).

Finally, operations database server A is accessed to record the association among the transmitted contents copy certificate, contents ID, user ID, and the leaf ID of copy destination client B (step S141). A synchronization process is performed so that the information recorded in operations database A is reflected in operations database C and can also be used by distributor B.

In the present embodiment, the acquisition of a contents copy certificate may be charged or free of charge. When the acquisition of a contents copy certificate is charged, the price may be rendered lower than that for normal license acquisition. These judgments are to be formulated by the associated contents distributor and controlled by the billing server.

When the issue of a contents copy certificate is to be charged, a billing process is performed, for instance, between steps S139 and S140. The billing process will now be described.

License server A accesses billing server A to make a request for a credit process. In compliance with the credit process request from license server A, billing server A examines the past payment records and other relevant history concerning the user ID and password to check for objectionable user records such as the user's failure to pay for a license (step S77). If it is found that crediting is permissible, the billing process is performed on the user that corresponds to the user ID and password.

On the other hand, if it is found that crediting is not appropriate, for instance, due to an objectionable payment record, billing server A transmits a credit result to license server A to indicate that the contents copy certificate cannot be granted. In response to the transmitted credit result, license server A performs a predetermined error handling process and terminates the entire processing routine. In this instance, the contents copy certificate does not issue to client A.

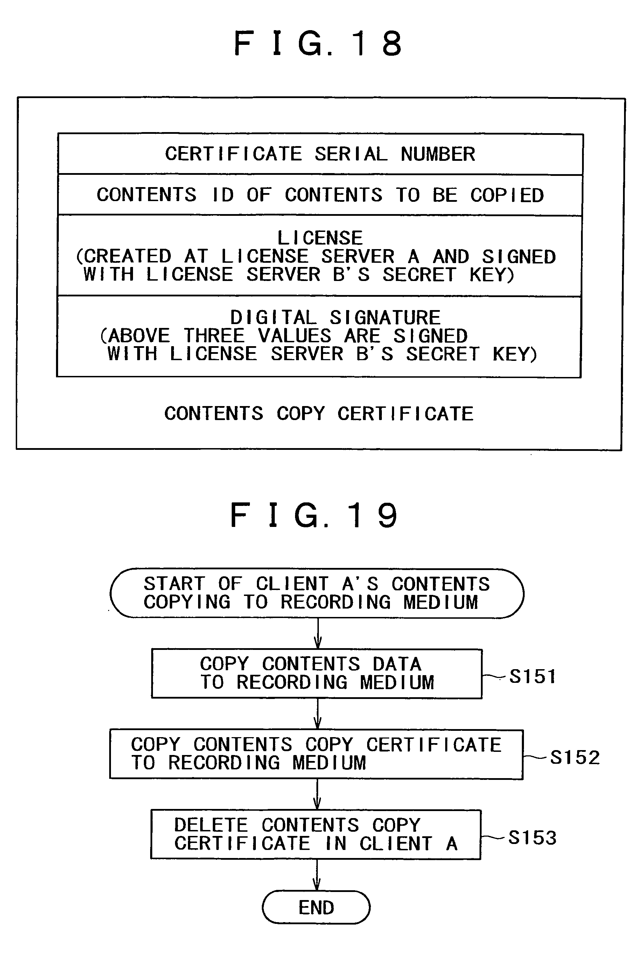

Fig. 18 schematically illustrates the data structure of a contents copy certificate that is issued by a license server. As shown in the figure, the contents copy certificate mainly includes a certificate serial number, the contents ID of the contents to be copied, a license, and an electronic signature.

The license is electronically signed with the secret key of a license server (license server B in the present case) that registers a copy destination client (client B in the present case) (as described earlier).

The electronic signature is created with the secret key of license server B in relation to three values, which are the certificate serial number, contents ID, and license.

Since the license and electronic signature are signed with the secret key of license server B, it is possible to achieve decryption for copy destination client B by using the public key of license server B.

Copying the contents and contents copy certificate to a recording medium

The contents are moved with a contents copy certificate attached in order to ensure that the contents downloaded into client A can also be used in client B.

In the example shown in Fig. 1, the downloaded contents are copied to a removable recording medium, which is then inserted into client B to move the contents.

In the above case, a process is performed at client A to obtain the contents from the contents storage section and write the contents onto a recording medium. At client B, a process is performed to read the contents recorded on the recording medium and store the contents into the contents storage section.

The method for moving contents without a license from one client to another is not limited to the above. Alternatively, the user may move the contents between its clients via a wired or wireless communications link instead of using a recording medium. Further, if the contents are purchased by one client of a certain user, the associated contents distributor may automatically distribute the contents to another client owned by the same user.

Fig. 19 is a flowchart illustrating the inter-client contents move processing steps that are performed by client A, which is a contents move source.

First of all, step S151 is performed to access the contents storage section, obtain the contents data to be moved, and copy the contents data to a recording medium.

Next, the contents copy certificate, which has been acquired by performing the procedure described above, is copied to the recording medium (step S152).

The contents copy certificate within client A is then deleted (step S153).

The above contents copy certificate deletion process is performed to prevent the certificate from being duplicated without prior consent or illegally used. Therefore, if there is no security problem, step S153 may be omitted.

Performing a process for acquiring the contents

Client B can use contents, when a recording medium to which contents data and contents copy certificate are copied is inserted into client A and internally acquired.

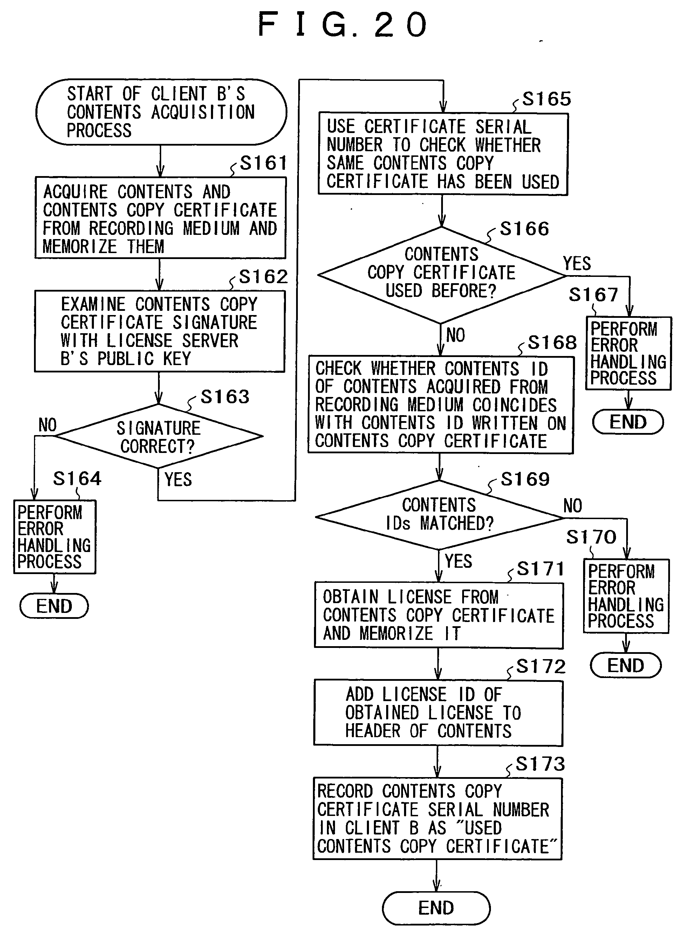

Fig. 20 is a flowchart illustrating the processing steps that client B, which is a contents copy destination, performs to acquire contents.

Client B first acquires the contents data and contents copy certificate from the inserted recording medium and memorizes the data and certificate (step S161).

Next, the electronic signature affixed to the contents copy certificate is examined with the public key of license server B (step S162) to check whether the electronic signature is correct, that is, to verify that the contents copy certificate is not falsified (step S163).

If it is found that the electronic signature is incorrect or that the contents copy certificate is falsified, query step S163 is answered "Yes" to proceed to step S164. In step S164, a predetermined error handling process is performed to terminate the entire processing routine. In this instance, client B cannot use the contents, because the associated license cannot be obtained from the contents copy certificate.

On the other hand, if it is found that the electronic signature is correct, the serial number of the contents copy certificate is used to check for the use of the same contents copy certificate (step S165), that is, to determine whether the contents copy certificate has ever been used (step S166).

If the same contents copy certificate has already been used, query step S166 is answered "Yes" to proceed to step S167. In step S167, a predetermined error handling process is performed to terminate the entire processing routine. In this instance, client B cannot use the contents, because the associated license cannot be obtained from the contents copy certificate.

On the other hand, if the same contents copy certificate has never been used, step S168 is performed to check whether the contents ID of the contents acquired from the recording medium coincides with the contents ID written on the contents copy certificate, that is, to determine whether these contents ID match (step S169).

If the contents IDs do not match, query step S169 is answered "No" to proceed to step S170. In step S170, a predetermined error handling process is performed to terminate the entire processing routine. In this instance, client B cannot use the contents, because the associated license cannot be obtained from the contents copy certificate.

On the other hand, if the contents IDs match, the license is obtained from the contents copy certificate and memorized (step S171).

The license ID of the obtained license is then added to the header of the contents (step S172), and the resulting contents are stored in the contents storage section. As a result, a copy of the contents data acquired from the recording medium is in the same format as shown in Fig. 9. Therefore, the contents reproduction process section can reproduce the contents by performing the normal contents reproduction process (as described earlier and indicated in Fig. 10).

Finally, the serial number of the contents copy certificate is recorded in client B as a "used contents copy certificate" (step S173).

It is preferred that the algorithm for contents copy certificate validity check, which corresponds to steps S163, S166, and S169, be implemented as a tamperproof process.

When contents data is acquired by following the processing steps described above, client B can reproduce contents by performing the contents reproduction process shown in Fig. 10.

First, client B acquires contents identification information (CID) that the user has entered with the keyboard, mouse, or other input device (step S41). When the contents are designated in the above manner, the license ID corresponding to the contents is read.

Next, step S42 is performed to check whether the license corresponding to the read license ID is already acquired by the client and stored in the license acquisition and management section.

If the corresponding license is not acquired yet, the program flow proceeds to step S43 and perform a license acquisition process. However, at this stage, the license obtained from the contents copy certificate is stored in the license acquisition and management section. It is therefore judged that the license is already acquired.

Next, step S44 is performed to judge whether the license is still valid. If it is judged that the license has already expired, the program flow proceeds to step S45 and perform a license update process. Client B performs the license update process by following the processing steps shown in Fig. 14.

If it is found in step S44 that the license is still valid or if the license is updated in step S45, step S46 is performed to judge whether the license is legal. If the license is illegal, an error handling process is performed (step S47).

If it is found in step S46 that the license is legal, step S48 is performed to read the associated encrypted contents data from the contents storage section. Step S49 is then performed to decrypt the encrypted contents data with the contents key $K_c$. This decryption is conducted for each of the encryption blocks arranged in the data section shown in Fig. 9.

Further, step S50 is followed to decode the decrypted contents data and perform a contents reproduction process.

Supplement

While the present invention has been described in detail in conjunction with specific embodiments, persons of skill in the art will appreciate that variations may be made without departure from the scope and spirit of the present invention. The described embodiments are to be considered in all respects only as illustrative and not restrictive. The scope of the invention is, therefore, indicated by the appended claims rather than by the foregoing description.

Industrial Applicability

The present invention provides an excellent contents distribution system, an information processing apparatus or method for using the contents, and a computer program that enable a licensed user to use contents from a plurality of devices while preventing an illegal use of the contents.

Further, the present invention allows separate clients connectable to their respective contents distributors to share contents purchased by the clients. When contents purchased by a certain client are to be used by another client, the associated contents distributor, copyright holder, or the like may determine at one's own discretion whether the contents are available at a charge or free of charge.

If billing is to be conducted when contents purchased by a first client are to be shared by a second client, the present invention can perform a billing process simply by using the second client. As a result, increased user-friendliness is provided for customers.

When reproduction environment information (such as reproduction listings, reproduction settings [volume setting, repeated reproduction setting, etc.], GUI windows, and bookmarks for musical pieces to be purchased) is set or updated by one client, the present invention ensures that such information is reflected in another client.

**Claims**

1. A contents distribution system for distributing contents to clients of a user, wherein the user is capable of owning two or more clients, and each client legally uses the contents in compliance with an acquired license, said contents distribution system comprising:

registration means for registering each client of the user and acquiring customer-related information;
customer-related information management means for managing customer-related information;
contents supply means for supplying contents to a client in compliance with a request from the client;
license supply means for supplying, in compliance with a request from a client, a license for contents acquired from said contents supply means to the client who has acquired the contents; and
contents copy certificate supply means for supplying a contents copy certificate, which indicates a contents move from one client of the user to an other is legal, to a move source client.

2. The contents distribution system according to claim 1, wherein said contents copy certificate supply means generates a contents copy certificate that contains a license for a move destination client.

3. The contents distribution system according to claim 1, wherein the contents move source client and the contents move destination client are registered with different license supply means so that each license supply means supplies its own public key to the registered client, and wherein said contents copy certificate supply means electronically signs the contents copy certificate with a secret key of a license supply means with which the contents move destination client is registered.

4. The contents distribution system according to claim 1, wherein said contents copy certificate supply means acquires a license ID concerning the contents to be moved and the client ID of a move destination client from said contents move source client, sends an inquiry to said customer-related information management means to verify that the move source client is legal, and that the move source client has already acquired a license for the contents to be moved, and further that the user owning the move source client actually owns the move destination client, and then supplies a contents copy certificate.

5. The contents distribution system according to claim 1, wherein said customer-related information management means manages a table defining the association between leaf IDs and client IDs, a table defining the association between client IDs and client public key certificates, a table defining the association between client IDs and user IDs, a table defining the association between contents IDs and license IDs, a table defining the association between user IDs and contents IDs of downloaded contents, a table defining the association between user IDs and license IDs of downloaded licenses, and a history of contents copy certificate issues.

6. The contents distribution system according to claim 1, wherein said customer-related information management means updates the customer-related information each time said contents supply means supplies contents to a client and/or each time said license supply means supplies a license to a client.

7. The contents distribution system according to claim 1, further comprising billing process means for performing a billing process on a client in accordance with a license supply and/or a contents copy certificate supply to the client.

8. The contents distribution system according to claim 5, wherein the amount billed by said billing process means for a license supply differs from the amount billed for a contents copy certificate supply.

9. An information processing apparatus for using contents, comprising:

contents download means for downloading contents;
contents storage means for storing contents;
license acquisition means for acquiring a license for the use of contents;
contents reproduction means for legally using contents with an acquired license;
contents copy certificate acquisition means for acquiring a contents copy certificate for moving contents; and
contents move means for attaching a contents copy certificate to contents stored in said contents storage means, moving the contents to an other device owned by the same user or acquiring contents to which a contents copy certificate is attached from an other device owned by the same user, verifying the validity of the contents copy certificate, obtaining a license, and storing the contents in said contents storage means.

10. The information processing apparatus according to claim 9, wherein said information processing apparatus registers at a license server to receive the license server's public key, wherein the contents copy certificate is electronically signed with the license server's secret key, and wherein said contents move means uses the public key of said license server to check whether the contents copy certificate, which is attached to externally acquired contents data, is falsified.

11. An information processing method for using contents, comprising:

a contents download step of downloading contents;
a contents storage step of storing contents;
a license acquisition step of acquiring a license for the use of contents;
a contents reproduction step of legally using contents with an acquired license;
a contents copy certificate acquisition step of acquiring a contents copy certificate for moving contents; and
a contents move step of attaching a contents copy certificate to contents stored in said contents storage step, moving the contents to an other device owned by the same user or acquiring contents to which a contents copy certificate is attached from an other device owned by the same user, verifying the validity of the contents copy certificate, obtaining a license, and storing the contents.

12. The information processing method according to claim 11, further comprising the step of registering at a license server and receiving the license server's public key, wherein the contents copy certificate is electronically signed with the license server's secret key, and wherein said contents move step uses the public key of said license server to check whether the contents copy certificate, which is attached to externally acquired contents data, is falsified.

13. A computer program written in a computer-readable form so that a process for supplying a license for the use of contents is performed on a computer system, wherein the user can own two or more clients and each client legally uses the contents in compliance with an acquired license, said computer program comprising the steps of:

acquiring a license ID concerning the contents to be moved from a contents move source client and the client ID of a contents move destination client;
judging that the contents move source client is legal, and that the contents move source client has already acquired a license for the contents to be moved, and further that the user owning the contents move source client actually owns the contents move destination client;
creating a contents copy certificate; and
supplying the contents copy certificate to the contents move source client.

# F I G. 1

DISTRIBUTOR

OPERATIONS DATABASE C

DISTRIBUTOR A

P3, P4

OPERATIONS DATABASE A

P1　　P2, P4　　P2, P4

CONTENTS SERVER A　　LICENSE SERVER A　　BILLING SERVER A

DISTRIBUTOR B

OPERATIONS DATABASE B

CONTENTS SERVER B　　LICENSE SERVER B　　BILLING SERVER B

P1　　P2, P4

CUSTOMER

CLIENT A

RECORDING MEDIUM

P5

P6
CONTENTS ACQUISITION PROCESS

CLIENT B

EP 1 586 999 A1

# FIG. 2

FIG. 3

CONTENTS SERVER

LICENSE SERVER

BILLING SERVER

CONTENTS DOWNLOAD SECTION

PREREGISTRATION SECTION

BILLING PROCESS SECTION

CONTENTS STORAGE SECTION

LICENSE ACQUISITION AND MANAGEMENT SECTION

CONTENTS MOVE PROCESS SECTION

CONTENTS REPRODUCTION PROCESS SECTION

CLIENT

CONTENTS MOVE PROCESS SECTION

ANOTHER CLIENT

EP 1 586 999 A1

# F I G. 4

BILLING SERVER

OPERATIONS DATABASE SERVER

DATABASE MANAGEMENT SECTION

LICENSE ISSUE SECTION

PREREGISTRATION SECTION

LICENSE STORAGE SECTION

LICENSE SERVER

LICENSE ACQUISITION AND MANAGEMENT SECTION

PREREGISTRATION SECTION

CLIENT

EP 1 586 999 A1

23

# F I G. 5

OPERATIONS DATABASE SERVER

DATABASE MANAGEMENT SECTION

CONTENTS DATA REMOVAL SECTION

ENCRYPTION SECTION

DISTRIBUTION CONTENTS STORAGE SECTION

TRANSMISSION /RECEPTION SECTION

CONTENTS SERVER

CONTENTS DOWNLOAD SECTION

CLIENT

EP 1 586 999 A1

# F I G. 6

```
CLIENT                              LICENSE SERVER
(PREREGISTRATION SECTION)

       │ S1                                │
       ▼                                   │
TRANSMIT SERVICE DATA REQUEST ─────────────▶
                                           │ S11
       ◀────────────────────────  TRANSMIT USER
       │ S2                        INFORMATION REQUEST
       ▼
ENTER USER INFORMATION                     │
       │ S3                                 │
       ▼                                   ▼
TRANSMIT USER INFORMATION ─────────────────▶
                                           │ S12
                                           ▼
                                   GENERATE DNK AND
                                   SERVICE DATA
                                           │ S13
       ◀────────────────────────  TRANSMIT SERVICE DATA
       │ S4                                │ S14
       ▼                                   ▼
RECORD SERVICE DATA                RECORD REGISTRATION
                                   INTO OPERATIONS DATABASE
       │                                   │
       ▼                                   ▼
    ( END )                             ( END )
```

# F I G. 7

```
      ╭─────────────────────────╮
      │  START OF CLIENT A'S     │
      │  DOWNLOAD PROCESS        │
      ╰─────────────────────────╯
                  │
                  ▼
   ┌─────────────────────────────┐
   │ ACCESS CONTENTS SERVER A     │──── S21
   └─────────────────────────────┘
                  │
                  ▼
   ┌─────────────────────────────┐
   │ CONVEY CONTENTS              │
   │ SELECTION INFORMATION        │──── S22
   └─────────────────────────────┘
                  │
                  ▼
   ┌─────────────────────────────┐
   │ CONVEY USER ID               │──── S23
   └─────────────────────────────┘
                  │
                  ▼
   ┌─────────────────────────────┐
   │ RECEIVE CONTENTS             │──── S24
   └─────────────────────────────┘
                  │
                  ▼
   ┌─────────────────────────────┐
   │ MEMORIZE CONTENTS            │──── S25
   └─────────────────────────────┘
                  │
                  ▼
           ╭─────────────╮
           │    END      │
           ╰─────────────╯
```

# F I G. 8

```
        ╭─────────────────────────╮
        │  START OF CONTENTS      │
        │  SERVER A'S PROCESS     │
        ╰─────────────────────────╯
                    │
                    ▼ ◄────────────────────┐
        S31 ╲      ╱╲                      │
             ╲   ╱    ╲                    │
              ╱  ACCESSED BY  ╲   NO       │
              ╲  CLIENT A?    ╱ ──────────┘
               ╲            ╱
                ╲  YES    ╱
                    │
                    ▼
        ┌─────────────────────────┐
        │  ACQUIRE CONTENTS       │── S32
        │  SELECTION INFORMATION  │
        └─────────────────────────┘
                    │
                    ▼
        ┌─────────────────────────┐
        │  READ SELECTED CONTENTS │── S33
        └─────────────────────────┘
                    │
                    ▼
        ┌─────────────────────────┐
        │  ENCRYPT CONTENTS       │── S34
        └─────────────────────────┘
                    │
                    ▼
        ┌─────────────────────────┐
        │  ACQUIRE LICENSE ID     │
        │  CORRE-SPONDING TO      │── S35
        │  CONTENTS ID FROM       │
        │  OPERATIONS DATABASE A  │
        └─────────────────────────┘
                    │
                    ▼
        ┌─────────────────────────┐
        │  ADD KEY AND LICENSE ID │
        │  TO HEADER AS NEEDED    │── S36
        │  FOR DECRYPTION         │
        └─────────────────────────┘
                    │
                    ▼
        ┌─────────────────────────┐
        │  ADD HEADER TO ENCRYPTED│── S37
        │  CONTENTS AND OUTPUT THEM│
        └─────────────────────────┘
                    │
                    ▼
        ┌─────────────────────────┐
        │  RECORD OUTPUT USER     │
        │  ID AND CONTENTS ID IN  │── S38
        │  OPERATIONS DATABASE A  │
        └─────────────────────────┘
                    │
                    ▼
              ╭───────────╮
              │    END    │
              ╰───────────╯
```

# F I G. 9

| HEADER | DATA |
|---|---|

| ENCRYPTION BLOCK 1 | ENCRYPTION BLOCK 2 | ENCRYPTION BLOCK 3 | ... |
|---|---|---|---|

| IV | Seed | $E_{K'c}$ (Data) |
|---|---|---|

CBC MODE

$K'c = Hash(Kc, Seed)$

| CONTENTS INFORMATION | LICENSE ID | EKB | $K_{EKB}(K_c)$ |
|---|---|---|---|

| CID | CODEC METHOD, ... |
|---|---|

EP 1 586 999 A1

# F I G. 1 0

START OF CLIENT A'S
REPRODUCTION PROCESS

S41 — READ LICENSE ID OF
CONTENTS SELECTED FOR USE

S42 — LICENSE
CORRESPONDING TO
READ LICENSE ID
ACQUIRED?

NO → S43 LICENSE
ACQUISITION PROCESS

YES

S44 — LICENSE
STILL VALID?

NO → S45 LICENCE
UPDATE PROCESS

YES

S46 — LICENSE LEGAL?

NO → S47 ERROR HANDLING
PROCESS

END

YES

S48 — READ RECORDED CONTENTS

S49 — DECRYPT CONTENTS

S50 — OUTPUT CONTENTS

END

# F I G. 1 1

START OF CLIENT A'S LICENSE ACQUISITION PROCESS

S61 — ACQUIRE INFORMATION DESIGNATION LICENSE TO BE PURCHASED

S62 — ACQUIRE USER ID AND PASSWORD

S63 — TRANSMIT LICENSE REQUEST

S64 — LICENSE ACQUIRED?

NO → S66 — ERROR HANDLING PROCESS → END

YES ↓

S65 — MEMORIZE LICENSE, CERTIFICATE, AND SECRET KEY

RETURN

# F I G. 1 2

| LICENSE ID |
|---|
| CREATION DATE/TIME |
| EXPIRATION DATE |
| USE CONDITIONS |
| LEAF ID |
| ELECTRONIC SIGNATURE |

LICENSE

# F I G. 1 3

START OF LICENSE SERVER A'S LICENSE SUPPLY PROCESS

S71 — ACCESSED BY CLIENT A? — NO

YES

S72 — REQUEST TRANSMISSION OF USER ID, PASSWORD, AND LICENSE ID, AND ACQUIRE THEM WHEN TRANSMITTED

S73 — REQUEST OPERATIONS DATABASE A TO CHECK USER ID AND PASSWORD

S74 — CHECKED ITEMS LEGAL? — NO

S75 — PERFORM ERROR HANDLING PROCESS → END

YES

S76 — REQUEST BILLING SERVER TO PERFORM CREDIT PROCESS

S77 — CREDITING PERMISSIBLE? — NO

S78 — PERFORM ERROR HANDLING PROCESS → END

YES

S79 — SELECT LICENSE ACCORDING TO TRANSMITTED LICENSE ID

S80 — ADD LEAF ID

S81 — SELECT USE CONDITIONS

S82 — AFFIX ELECTRONIC SIGNATURE (WITH LICENSE SERVER A'S SECRET KEY)

S83 — TRANSMIT LICENSE

S84 — RECORD OUTPUT LICENSE ID AND USER ID IN OPERATIONS DATABASE A

S85 — PERFORM BILLING PROCESS

END

EP 1 586 999 A1

# FIG. 14

```
     ┌─────────────────────────────┐
     │   START OF CLIENT A'S        │
     │   LICENSE UPDATE PROCESS     │
     └─────────────────────────────┘
                  │
                  ▼
┌─────────────────────────────────────┐
│ ACQUIRE INFORMATION DESIGNATING      │──S91
│ LICENSE TO BE UPDATED                │
└─────────────────────────────────────┘
                  │
                  ▼
┌─────────────────────────────────────┐
│ ACQUIRE USER ID AND PASSWORD         │──S92
└─────────────────────────────────────┘
                  │
                  ▼
┌─────────────────────────────────────┐
│ TRANSMIT USER ID AND PASSWORD        │
│ ACCORDING TO LICENSE                 │──S93
│ DESIGNATION INFORMATION              │
└─────────────────────────────────────┘
                  │
                  ▼
     ┌─────────────────────────────┐
     │ RECEIVE USE CONDITIONS       │──S94
     └─────────────────────────────┘
                  │
                  ▼
     ┌─────────────────────────────┐
     │ APPLY FOR PURCHASE           │──S95
     │ OF USE CONDITIONS            │
     └─────────────────────────────┘
                  │
                  ▼
     ┌─────────────────────────────┐
     │ ACQUIRE USE CONDITIONS       │──S96
     └─────────────────────────────┘
                  │
                  ▼
┌─────────────────────────────────────┐
│ UPDATE LICENSE USE CONDITIONS        │──S97
└─────────────────────────────────────┘
                  │
                  ▼
            ┌───────────┐
            │  RETURN   │
            └───────────┘
```

# F I G. 1 5

```
┌─────────────────────────────────────┐
│  START OF LICENSE SERVER A'S         │
│  LICENSE UPDATE PROCESS              │
└─────────────────────────────────────┘
                 │
                 ▼
┌─────────────────────────────────────┐
│   ALLOW CLIENT'S ACCESS             │ ── S101
└─────────────────────────────────────┘
                 │
                 ▼
┌─────────────────────────────────────┐
│   RECEIVE LICENSE UPDATE            │ ── S102
│   REQUEST INFORMATION               │
└─────────────────────────────────────┘
                 │
                 ▼
┌─────────────────────────────────────┐
│   PRESENT USE CONDITIONS            │ ── S103
└─────────────────────────────────────┘
                 │
                 ▼
┌─────────────────────────────────────┐
│   TRANSMIT USE CONDITIONS           │ ── S104
└─────────────────────────────────────┘
                 │
                 ▼
           ┌──────────┐
           │   END    │
           └──────────┘
```

# F I G. 1 6

```
      ┌─────────────────────────────────────────┐
      │ START OF CLIENT A'S CONTENTS COPY        │
      │ CERTIFICATE RECEPTION PROCESS            │
      └─────────────────────────────────────────┘
                        │
                        ▼
      ┌─────────────────────────────────────┐
      │    ACCESS LICENSE SERVER A           │──S111
      └─────────────────────────────────────┘
                        │
                        ▼
      ┌─────────────────────────────────────┐
      │    CONVEY CONTENTS SELECTION         │
      │  INFORMATION, LICENSE ID, AND        │──S112
      │  COPY DESTINATION CLIENT ID          │
      └─────────────────────────────────────┘
                        │
                        ▼
      ┌─────────────────────────────────────┐
      │  CONVEY USER ID AND PASSWORD         │──S113
      └─────────────────────────────────────┘
                        │
                        ▼
      ┌─────────────────────────────────────┐
      │ RECEIVE CONTENTS COPY CERTIFICATE    │──S114
      └─────────────────────────────────────┘
                        │
                        ▼
      ┌─────────────────────────────────────┐
      │ MEMORIZE CONTENTS COPY CERTIFICATE   │──S115
      └─────────────────────────────────────┘
                        │
                        ▼
                  ┌───────────┐
                  │    END    │
                  └───────────┘
```

EP 1 586 999 A1

# F I G. 1 7

START OF LICENSE SERVER A'S CONTENTS COPY CERTIFICATE ISSUE PROCESS

S121 — ACCESSED BY CLIENT A? — NO / YES

S122 — REQUEST TRANSMISSION OF CONTENS SELECTION INFORMATION, LICENSE ID, USER ID, PASSWORD, AND COPY DESTINATION CLIENT ID (CLIENT B) AND ACQUIRE THEM WHEN TRANSMITTED

S123 — REQUEST OPERATIONS DATABASE A TO CHECK USER ID AND PASSWORD

S124 — CHECKED ITEM LEGAL? — NO / YES

S125 — PERFORM ERROR HANDLING PROCESS — END

S126 — REQUEST OPERATIONS DATABASE A TO CHECK WHETHER CLIENT A HAS ALREADY PURCHASED CONTENTS

S127 — CHECK RESULT ACCEPTABLE? — NO / YES

S128 — PERFORM ERROR HANDLING PROCESS — END

S129 — REQUEST OPERATIONS DATABASE C TO CHECK WHETHER USER OF CLIENT A OWNS CLIENT B

S130 — CHECK RESULT ACCEPTABLE? — NO / YES

S131 — PERFORM ERROR HANDLING PROCESS — END

S132 — ASK OPERATIONS DATABASE A WHETHER CONTENTS COPY CERTIFICATE MAY BE ISSUED

S133 — ISSUE PERMITTED? — NO / YES

S134 — PERFORM ERROR HANDLING PROCESS — END

S135 — ACQUIRE CLIENT B'S LEAF ID FROM OPERATIONS DATABASE C

S136 — ACQUIRE LICENSE INFORMATION CORRESPONDING TO LICENSE ID

S137 — CREATE LICENSE ACCORDING TO ACQUIRED LICENSE INFORMATION AND CLIENT B'S LEAF ID

S138 — SIGN CREATED LICENSE WITH LICENSE SERVER B'S SECRET KEY

S139 — CREATE CONTENTS COPY CERTIFICATE FROM ACQUIRED INFORMATION AND AFFIX DIGITAL SIGNATURE WITH LICENSE SERVER B'S SECRET KEY

S140 — TRANSMIT CONTENTS COPY CERTIFICATE

S141 — RECORD CONTENTS COPY CERTIFICATE, CORRESPONDING CONTENTS ID, USER ID, AND CLIENT B'S LEAF ID IN OPERATIONS DATABASE A

END

# F I G. 1 8

> CERTIFICATE SERIAL NUMBER
>
> CONTENTS ID OF CONTENTS TO BE COPIED
>
> LICENSE
> (CREATED AT LICENSE SERVER A AND SIGNED
> WITH LICENSE SERVER B'S SECRET KEY)
>
> DIGITAL SIGNATURE
> (ABOVE THREE VALUES ARE SIGNED
> WITH LICENSE SERVER B'S SECRET KEY)
>
> CONTENTS COPY CERTIFICATE

# F I G. 1 9

START OF CLIENT A'S CONTENTS
COPYING TO RECORDING MEDIUM

↓

COPY CONTENTS DATA
TO RECORDING MEDIUM — S151

↓

COPY CONTENTS COPY CERTIFICATE
TO RECORDING MEDIUM — S152

↓

DELETE CONTENTS COPY
CERTIFICATE IN CLIENT A — S153

↓

END

# F I G. 2 0

START OF CLIENT B'S
CONTENTS ACQUISITION
PROCESS

S161

ACQUIRE CONTENTS AND
CONTENTS COPY CERTIFICATE
FROM RECORDING MEDIUM AND
MEMORIZE THEM

S162

EXAMINE CONTENTS COPY
CERTIFICATE SIGNATURE
WITH LICENSE SERVER
B'S PUBLIC KEY

S163

SIGNATURE
CORRECT?

NO

S164

PERFORM
ERROR
HANDLING
PROCESS

END

YES

S165

USE CERTIFICATE SERIAL
NUMBER TO CHECK WHETHER
SAME CONTENTS COPY
CERTIFICATE HAS BEEN USED

S166

CONTENTS
COPY CERTIFICATE
USED BEFORE?

YES

S167

PERFORM
ERROR
HANDLING
PROCESS

END

NO

S168

CHECK WHETHER CONTENTS ID
OF CONTENTS ACQUIRED FROM
RECORDING MEDIUM COINCIDES
WITH CONTENTS ID WRITTEN ON
CONTENTS COPY CERTIFICATE

S169

CONTENTS
IDs MATCHED?

NO

S170

PERFORM
ERROR
HANDLING
PROCESS

END

YES

S171

OBTAIN LICENSE FROM
CONTENTS COPY CERTIFICATE
AND MEMORIZE IT

S172

ADD LICENSE ID OF
OBTAINED LICENSE TO
HEADER OF CONTENTS

S173

RECORD CONTENTS COPY
CERTIFICATE SERIAL NUMBER
IN CLIENT B AS "USED
CONTENTS COPY CERTIFICATE"

END

# F I G. 2 1

LICENSE SERVER    CONTENTS SERVER

| EKB | Enc (KR, Kc) | Enc (Kc, Content) |

DNK →

CLIENT

KR →

Kc →

CONTENTS

# F I G. 2 2

Enc (DNK, KR)

**INTERNATIONAL SEARCH REPORT**

| International application No. |
|---|
| PCT/JP03/16623 |

| A. CLASSIFICATION OF SUBJECT MATTER |
|---|
| Int.Cl⁷ G06F12/14, G06F15/00, G06F17/60 |

According to International Patent Classification (IPC) or to both national classification and IPC

| B. FIELDS SEARCHED |
|---|
| Minimum documentation searched (classification system followed by classification symbols) |
| Int.Cl⁷ G06F12/14, G06F15/00, G06F17/60 |

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2004 |
| Kokai Jitsuyo Shinan Koho | 1971–2004 | Toroku Jitsuyo Shinan Koho | 1994–2004 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2001-78266 A (Sanyo Electric Co., Ltd.), 23 March, 2001 (23.03.01), All pages; all drawings (Family: none) | 1-13 |
| Y | JP 2002-164885 A (Sanyo Electric Co., Ltd.), 07 June, 2002 (07.06.02), All pages; all drawings (Family: none) | 1-13 |
| Y | JP 2000-123095 A (Nippon Telegraph And Telephone Corp.), 28 April, 2000 (28.04.00), All pages; all drawings; in particular, Figs. 10, 16 & EP 980052 A2 | 1-13 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 April, 2004 (06.04.04) | 20 April, 2004 (20.04.04) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

International application No.

PCT/JP03/16623

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-82934 A  (Toshiba Corp.),<br>22 March, 2002 (22.03.02),<br>All pages, all drawings<br>(Family: none) | 1-13 |
| A | JP 2002-259605 A  (Sony Corp.),<br>13 September, 2002 (13.09.02),<br>All pages; all drawings<br>& WO 2002/069557 A1 | 1-13 |
| A | JP 2001-126009 A  (Nippon Telegraph And Telephone Corp.),<br>11 May, 2001 (11.05.01),<br>Prior Art<br>(Family: none) | 1-13 |
| Y | JP 2002-372976 A  (Sony Corp.),<br>26 December, 2002 (26.12.02),<br>All pages; all drawings<br>(Family: none) | 5 |

Form PCT/ISA/210 (continuation of second sheet) (July 1998)